# EUROPEAN PATENT APPLICATION

(11) **EP 4 529 268 A1**
(43) Date of publication of application: **26.03.2025**
(21) Application number: 23819210.8
(22) Date of filing: 08.06.2023
(51) Int. Cl.: H04W 36/00

(54) **MOBILITY MANAGEMENT METHOD FOR IAB NODE, AND RELATED DEVICE**

(30) Priority: 09.06.2022 CN 202210647691; 16.02.2023 CN 202310166658
(71) Applicant: Huawei Technologies Co., Ltd., Shenzhen, Guangdong 518129 (CN)
(72) Inventor: ZHU, Shichao, Shenzhen, Guangdong 518129 (CN); SUN, Fei, Shenzhen, Guangdong 518129 (CN); ZENG, Qinghai, Shenzhen, Guangdong 518129 (CN)
(74) Representative: Gill Jennings & Every LLP
(86) International application number: PCT/CN2023/099119
(87) International publication number: WO 2023/237046

(57) **Abstract**

This application provides an IAB node mobility management method and a related device. If an IAB node encounters an unpermitted area, the method provides a solution in which access of an IAB-MT is allowed but an IAB-DU is not activated. This is conducive to rapid recovery of communication after the IAB node moves out of the unpermitted area while satisfying an unpermitted area constraint. This application can support setting of an unpermitted area that is less than a cell granularity and that is related to a cell, and can also be compatible with setting of an unpermitted area that is greater than or equal to a cell granularity or that is unrelated to a cell.

## Description

This application claims priorities to Chinese Patent Application No. 202210647691.9, filed with the China National Intellectual Property Administration on June 9, 2022, and entitled "IAB NODE MOBILITY MANAGEMENT METHOD AND RELATED DEVICE", and to Chinese Patent Application No. 202310166658.9, filed with the China National Intellectual Property Administration on February 16, 2023, and entitled "IAB NODE MOBILITY MANAGEMENT METHOD AND RELATED DEVICE", both of which are incorporated herein by reference in their entireties.

### TECHNICAL FIELD

This application relates to the field of communication technologies, and in particular, to an IAB node mobility management method and a related device.

### BACKGROUND

An access link (access link) and a backhaul link (backhaul link) in an integrated access and backhaul (integrated access and backhaul, IAB) technology use a wireless transmission solution, reducing fiber deployment and meeting requirements of a current network for performance indicators such as ultra-large capacity, wider coverage, ultra-high reliability, and ultra-low latency. When an IAB node (IAB node) provides a service for user equipment (user equipment, UE), the IAB node may be considered as an IAB distributed unit (IAB distributed unit, IAB-DU); or when the IAB is oriented to a donor gNodeB (donor gNodeB, DgNB), the IAB node may be used as an IAB mobile terminal (IAB mobile termination, IAB-MT).

In a current standard protocol, mobility enhancement is performed on the IAB technology, for example, group handover enhancement of mobile UE, mobility resource conflict resolution (such as physical cell identifier conflict and random access channel resource conflict), and mobility IAB node configuration (such as tracking area code update and unpermitted area configuration). For example, when the IAB node is located in an unpermitted area, the IAB node is not allowed to provide a service for the UE. However, the range of the unpermitted area is not described currently. For example, there may be an unpermitted area less than or equal to a cell (cell) granularity, and the unpermitted area less than or equal to the cell granularity may be related to a cell (cell-specific). For example, a location belongs to an unpermitted area of a cell A, but does not belong to an unpermitted area of a cell B. When the IAB node is located at the location, if the IAB-MT accesses the cell A, the IAB node is barred from working; or if the IAB-MT accesses the cell B, the IAB node is allowed to work. Therefore, when the IAB node is powered on or encounters an unpermitted area that is less than or equal to a cell granularity and that is related to a cell during normal operation, how to select a cell for access or how to perform cell handover becomes a problem to be resolved.

### SUMMARY

This application provides an IAB node mobility management method and a related device. If an IAB node encounters an unpermitted area, the method provides a solution in which access of an IAB-MT is allowed but an IAB-DU is not activated. This is conducive to rapid recovery of communication after the IAB node moves out of the unpermitted area while satisfying an unpermitted area constraint. This application can support setting of an unpermitted area that is less than a cell granularity and that is related to a cell, and can also be compatible with setting of an unpermitted area that is greater than or equal to a cell granularity or that is unrelated to a cell.

According to a first aspect, this application provides an IAB node mobility management method. The method may be performed by a first access network device, may be performed by a component (for example, a processor, a chip, or a chip system) of the first access network device, or may be implemented by a logical module or software that can implement all or some functions of the first access network device. The first access network device sends unpermitted area information in a cell of the first access network device to an IAB node, and responds to a random access process initiated by the IAB node to a first cell of the first access network device. The first cell is a cell in which the IAB node is located and whose signal quality is best in a cell of a first area of the IAB node; and the first area is an area other than an unpermitted area in the cell of the first access network device.

In the method, the first access network device may directly indicate unpermitted area information in a current cell to the IAB node, so that when the IAB-MT is powered on, the IAB-MT can directly select a cell with best signal quality for access, where the IAB-MT is located in a first area of the cell, thereby helping the IAB node to select a serving cell located in a permitted area to work normally under a condition that an unpermitted area constraint exists.

In a possible implementation, unpermitted area information in a cell of the first access network device is received, and unpermitted area information in a cell of a second access network device is received, where the second access network device includes one or more access network devices adjacent to the first access network device. For example, the unpermitted area information that is in the cell of the first access network device and that is sent by a management device is received, and the unpermitted area information that is in the cell of the second access network device and that is sent by the second access network device is received.

In the method, the management device (for example, an operation, administration and maintenance (operation, administration and maintenance, OAM)) may notify a corresponding access network device of unpermitted area information (for example, longitude and latitude information), and adjacent access network devices may also exchange unpermitted area information within a control range of each other.

In a possible implementation, when the IAB node is located in a second area of a serving cell, a distributed unit of the IAB node is configured to be in an inactive state; or when the IAB node is located in a first area of the serving cell, the distributed unit of the IAB node is configured to be in an active state. The first area is a permitted area, and the second area is an unpermitted area.

In the method, if the IAB node is not located in an area other than an unpermitted area of any cell whose signal strength is greater than a threshold when the IAB node is powered on, the IAB-MT accesses a cell with a best signal, but does not activate the IAB-DU; or if the IAB node is located in an area other than an unpermitted area of any cell whose signal strength is greater than a threshold when the IAB node is powered on, the IAB-MT accesses the cell whose signal strength is greater than the threshold, and activates the IAB-DU.

In a possible implementation, unpermitted area information in a cell of a second access network device is sent to the IAB node, where the second access network device includes one or more access network devices adjacent to the first access network device.

In the method, the first access network device may further directly send, to the IAB node, unpermitted area information in a cell of the one or more access network devices adjacent to the first access network device, so as to help determine whether the IAB node is located in an unpermitted area of a serving cell or a neighboring cell.

In a possible implementation, when the IAB node is located in the unpermitted area in the cell of the first access network device and an unpermitted area in the cell of the second access network device, and a trigger condition for handing over the IAB node from the first access network device to the second access network device is met, a handover request message is sent to the second access network device, where the handover request message is used to request to hand over the IAB node to the second access network device, and configure a distributed unit of the IAB node to be in an inactive state.

In the method, if the IAB node is located in an unpermitted area of a serving cell or a neighboring cell, but a handover event (for example, a handover A3/A5 event) occurs, the first access network device performs normal measurement reporting, and hands over the IAB node to the neighboring cell, but still does not activate the IAB-DU after handing over the IAB node.

In a possible implementation, when the IAB node is located in a first area in the cell of the first access network device, first information of the IAB node is received, and a distributed unit of the IAB node is configured to be in an active state based on the first information of the IAB node. The first information includes one or more of the following information: location information of the IAB node, an identifier of a target cell selected by the IAB node to access, and indication information for requesting to activate the distributed unit of the IAB node.

In the method, if the IAB node located in the unpermitted area determines that the IAB node has entered the first area of the serving cell, the IAB-MT performs measurement reporting (for example, indicates a location of the IAB-MT) to the first access network device, to indicate that the IAB-MT expects to restore a DU function, so that the first access network device can activate the IAB-DU.

In a possible implementation, when the IAB node is located in a second area of a serving cell and is located in a third area of a neighboring cell whose signal strength is greater than a threshold, a measurement report and first information from the IAB node are received; and a handover request message is sent to a second access network device whose access signal quality is best in a third area of the second access network device in which the IAB node is located, where the handover request message is used to request to hand over the IAB node to the second access network device, where the third area is an area other than an unpermitted area in the neighboring cell.

In the method, if the IAB node located in the unpermitted area determines that the IAB node has entered a first area of the neighboring cell whose signal quality is greater than the threshold, the IAB-MT performs measurement reporting (for example, indicates a location of the IAB-MT) to the first access network device, to indicate that the IAB-MT expects to be handed over to the neighboring cell whose signal quality is greater than the threshold, and restores a DU function, so that the first access network device can hand over the IAB node to the neighboring cell whose signal quality is greater than the threshold, and activate the IAB-DU after the handover.

In a possible implementation, when the distributed unit of the IAB node is in an inactive state, the handover request message is further used to configure the distributed unit of the IAB node to be in an active state.

In the method, if the IAB node located in the unpermitted area determines that the IAB node has entered the first area of the neighboring cell whose signal quality is greater than the threshold, after handing over the IAB node to the neighboring cell whose signal quality is greater than the threshold, the first access network device may further activate the IAB-DU.

In a possible implementation, when the IAB node is located in a second area of the serving cell, and is not located in a third area of any neighboring cell whose signal strength is greater than a threshold, one or more target cells are determined for a terminal device served by the IAB node, where the third area is an area other than an unpermitted area in the neighboring cell; and after the terminal device served by the IAB node is handed over to the one or more target cells, a distributed unit of the IAB node is configured to be in an inactive state.

In the method, if the IAB node that works normally determines that the IAB node moves to the unpermitted area of the serving cell, and is not located in the third area of the any neighboring cell whose signal strength is greater than the threshold, the IAB-MT performs measurement reporting (for example, indicates a location of the IAB-MT) to the first access network device, so that the first access network device can hand over the IAB-MT to another cell or disable the IAB-DU.

In a possible implementation, that the distributed unit of the IAB node is configured to be in an inactive state includes one or more of the following manners: skipping initiating setup of a default radio link control channel; skipping initiating setup of an F1 interface; configuring all cells of the distributed unit of the IAB node to bar access of the terminal device; or skipping configuring a transport network layer association for the distributed unit of the IAB node.

According to a second aspect, this application provides an IAB node mobility management method. The method may be performed by a first access network device, may be performed by a component (for example, a processor, a chip, or a chip system) of the first access network device, or may be implemented by a logical module or software that can implement all or some functions of the first access network device. The first access network device receives location information of an IAB node, and when the location information indicates that the IAB node is located in an unpermitted area in a serving cell, sends neighboring cell measurement indication information to the IAB node, where the neighboring cell measurement indication information indicates the IAB node to perform a neighboring cell measurement operation on one or more neighboring cells. When a neighboring cell measurement result is that signal quality of a first neighboring cell is greater than a threshold and the IAB node is located in a first area of the first neighboring cell, the IAB node is handed over to the first neighboring cell, where the first area is an area other than an unpermitted area in a cell of the first access network device.

In the method, if the first access network device does not directly indicate unpermitted area information of a current cell to the IAB node, the IAB node directly selects a cell with a best access signal, and reports location information to the first access network device after the access, and then the first access network device determines whether to hand over an IAB-MT to a cell that is located in a first area of the cell and whose signal quality is best.

In a possible implementation, unpermitted area information in a cell of the first access network device is received, and unpermitted area information in a cell of a second access network device is received, where the second access network device includes one or more access network devices adjacent to the first access network device. For example, the unpermitted area information that is in the cell of the first access network device and that is sent by a management device is received, and the unpermitted area information that is in the cell of the second access network device and that is sent by the second access network device is received.

In the method, the management device (for example, an operation, administration and maintenance (operation, administration and maintenance, OAM)) may notify a corresponding access network device of an unpermitted area range (for example, a longitude and latitude range), and adjacent access network devices may also exchange unpermitted area information within a control range of each other.

In a possible implementation, when the IAB node is located in a second area of a serving cell, a distributed unit of the IAB node is configured to be in an inactive state; or when the IAB node is located in a first area of the serving cell, the distributed unit of the IAB node is configured to be in an active state. The first area is a permitted area, and the second area is an unpermitted area.

In the method, if the IAB node is not located in an area other than an unpermitted area of any cell whose signal strength is greater than a threshold when the IAB node is powered on, the IAB-MT accesses a cell with a best signal, but does not activate the IAB-DU; or if the IAB node is located in an area other than an unpermitted area of any cell whose signal strength is greater than a threshold when the IAB node is powered on, the IAB-MT accesses the cell whose signal strength is greater than the threshold, and activates the IAB-DU.

In a possible implementation, unpermitted area information in a cell of the first access network device and unpermitted area information in a cell of a second access network device are sent to the IAB node, where the second access network device includes one or more access network devices adjacent to the first access network device.

In the method, the first access network device may further directly send, to the IAB node, the unpermitted area information in the cell of the first access network device and unpermitted area information in a cell of the one or more access network devices adjacent to the first access network device, so as to help determine whether the IAB node is located in an unpermitted area of a serving cell or a neighboring cell.

In a possible implementation, when the IAB node is located in the unpermitted area in the cell of the first access network device and an unpermitted area in the cell of the second access network device, and a trigger condition for handing over the IAB node from the first access network device to the second access network device is met, a handover request message is sent to the second access network device, where the handover request message is used to request to hand over the IAB node to the second access network device, and configure a distributed unit of the IAB node to be in an inactive state.

In the method, if the IAB node is located in an unpermitted area of a serving cell or a neighboring cell, but a handover event (for example, a handover A3/A5 event) occurs, the first access network device performs normal measurement reporting, but still does not activate the IAB-DU after handing over the IAB node.

In a possible implementation, when the IAB node is located in a first area in the cell of the first access network device, first information of the IAB node is received, and a distributed unit of the IAB node is configured to be in an active state based on the first information of the IAB node. The first information includes one or more of the following information: location information of the IAB node, an identifier of a target cell selected by the IAB node to access, and indication information for requesting to activate the distributed unit of the IAB node.

In the method, if the IAB node located in the unpermitted area determines that the IAB node has entered the first area of the serving cell, the IAB-MT performs measurement reporting (for example, indicates a location of the IAB-MT) to the first access network device, to indicate that the IAB-MT expects to restore a DU function, so that the first access network device can directly activate the IAB-DU.

In a possible implementation, when the IAB node is located in a second area of a serving cell and is located in a third area of a neighboring cell whose signal strength is greater than a threshold, a measurement report and first information from the IAB node are received; and a handover request message is sent to a second access network device whose access signal quality is best in a third area of the second access network device in which the IAB node is located, where the handover request message is used to request to hand over the IAB node to the second access network device, where the third area is an area other than an unpermitted area in the neighboring cell.

In the method, if the IAB node located in the unpermitted area determines that the IAB node has entered a first area of the neighboring cell whose signal quality is greater than the threshold, the IAB-MT performs measurement reporting (for example, indicates a location of the IAB-MT) to the first access network device, to indicate that the IAB-MT expects to be handed over to the neighboring cell whose signal quality is greater than the threshold, and restores a DU function, so that the first access network device can hand over the IAB node to the neighboring cell whose signal quality is greater than the threshold, and activate the IAB-DU after the handover.

In a possible implementation, when the distributed unit of the IAB node is in an inactive state, the handover request message is further used to configure the distributed unit of the IAB node to be in an active state.

In the method, if the IAB node located in the unpermitted area determines that the IAB node has entered the first area of the neighboring cell whose signal quality is greater than the threshold, after handing over the IAB node to the neighboring cell whose signal quality is greater than the threshold, the first access network device may further activate the IAB-DU.

In a possible implementation, when the IAB node is located in a second area of the serving cell, and is not located in a third area of any neighboring cell whose signal strength is greater than a threshold, one or more target cells are determined for a terminal device served by the IAB node, where the third area is an area other than an unpermitted area in the neighboring cell; and after the terminal device served by the IAB node is handed over to the one or more target cells, a distributed unit of the IAB node is configured to be in an inactive state.

In the method, if the IAB node that works normally determines that the IAB node moves to the unpermitted area of the serving cell, and is not located in the third area of the any neighboring cell whose signal strength is greater than the threshold, the IAB-MT performs measurement reporting (for example, indicates a location of the IAB-MT) to the first access network device, so that the first access network device can hand over the IAB-MT to another cell or disable the IAB-DU.

In a possible implementation, that the distributed unit of the IAB node is configured to be in an inactive state includes one or more of the following manners: skipping initiating setup of a default radio link control channel; skipping initiating setup of an F1 interface; configuring all cells of the distributed unit of the IAB node to bar access of the terminal device; or skipping configuring a transport network layer association for the distributed unit of the IAB node.

According to a third aspect, this application provides an IAB node mobility management method. The method may be performed by a first access network device, may be performed by a component (for example, a processor, a chip, or a chip system) of the first access network device, or may be implemented by a logical module or software that can implement all or some functions of the first access network device. When an IAB node is located in a second area of a cell whose signal quality is greater than a threshold in a cell of the first access network device, the first access network device responds to a random access process initiated by a mobile terminal MT of the IAB node to a second cell of the first access network device, where the second cell is a cell in which the IAB node is located and whose signal quality is best in a cell of a second area of the IAB node; and the second area is an unpermitted area in the cell of the first access network device. The first access network device sends neighboring cell measurement indication information to the IAB node, where the neighboring cell measurement indication information indicates the IAB node to perform a neighboring cell measurement operation on one or more neighboring cells.

In the method, if the IAB node is not located in a first area of any cell whose signal strength is greater than a threshold (that is, an area other than an unpermitted area in the cell) when the IAB node is powered on, the IAB-MT accesses a cell with best signal quality, but does not activate an IAB-DU.

In a possible implementation, unpermitted area information in a cell of the first access network device is received, and unpermitted area information in a cell of a second access network device is received, where the second access network device includes one or more access network devices adjacent to the first access network device. For example, the unpermitted area information that is in the cell of the first access network device and that is sent by a management device is received, and the unpermitted area information that is in the cell of the second access network device and that is sent by the second access network device is received.

In the method, the management device (for example, an operation, administration and maintenance (operation, administration and maintenance, OAM)) may notify a corresponding access network device of an unpermitted area range (for example, a longitude and latitude range), and adjacent access network devices may also exchange unpermitted area information within a control range of each other.

In a possible implementation, when the IAB node is located in a second area of a serving cell, a distributed unit of the IAB node is configured to be in an inactive state; or when the IAB node is located in a first area of the serving cell, the distributed unit of the IAB node is configured to be in an active state. The first area is a permitted area, and the second area is an unpermitted area.

In the method, if the IAB node is not located in an area other than an unpermitted area of any cell whose signal strength is greater than a threshold when the IAB node is powered on, the IAB-MT accesses a cell with a best signal, but does not activate the IAB-DU; or if the IAB node is located in an area other than an unpermitted area of any cell whose signal strength is greater than a threshold when the IAB node is powered on, the IAB-MT accesses the cell whose signal strength is greater than the threshold, and activates the IAB-DU.

In a possible implementation, unpermitted area information in a cell of the first access network device and unpermitted area information in a cell of a second access network device are sent to the IAB node, where the second access network device includes one or more access network devices adjacent to the first access network device.

In the method, the first access network device may further directly send, to the IAB node, the unpermitted area information in the cell of the first access network device and unpermitted area information in a cell of the one or more access network devices adjacent to the first access network device, so as to help determine whether the IAB node is located in an unpermitted area of a serving cell or a neighboring cell.

In a possible implementation, when the IAB node is located in the unpermitted area in the cell of the first access network device and an unpermitted area in the cell of the second access network device, and a trigger condition for handing over the IAB node from the first access network device to the second access network device is met, a handover request message is sent to the second access network device, where the handover request message is used to request to hand over the IAB node to the second access network device, and configure a distributed unit of the IAB node to be in an inactive state.

In the method, if the IAB node is located in an unpermitted area of a serving cell or a neighboring cell, but a handover event (for example, a handover A3/A5 event) occurs, the first access network device performs normal measurement reporting, but still does not activate the IAB-DU after handing over the IAB node.

In a possible implementation, when the IAB node is located in a first area in the cell of the first access network device, first information of the IAB node is received, and a distributed unit of the IAB node is configured to be in an active state based on the first information of the IAB node. The first information includes one or more of the following information: location information of the IAB node, an identifier of a target cell selected by the IAB node to access, and indication information for requesting to activate the distributed unit of the IAB node.

In the method, if the IAB node located in the unpermitted area determines that the IAB node has entered the first area of the serving cell, the IAB-MT performs measurement reporting (for example, indicates a location of the IAB-MT) to the first access network device, to indicate that the IAB-MT expects to restore a DU function, so that the first access network device can directly activate the IAB-DU.

In a possible implementation, when the IAB node is located in a second area of a serving cell and is located in a third area of a neighboring cell whose signal strength is greater than a threshold, a measurement report and first information from the IAB node are received; and a handover request message is sent to a second access network device whose access signal quality is best in a third area of the second access network device in which the IAB node is located, where the handover request message is used to request to hand over the IAB node to the second access network device, where the third area is an area other than an unpermitted area in the neighboring cell.

In the method, if the IAB node located in the unpermitted area determines that the IAB node has entered a first area of the neighboring cell whose signal quality is greater than the threshold, the IAB-MT performs measurement reporting (for example, indicates a location of the IAB-MT) to the first access network device, to indicate that the IAB-MT expects to be handed over to the neighboring cell whose signal quality is greater than the threshold, and restores a DU function, so that the first access network device can hand over the IAB node to the neighboring cell whose signal quality is greater than the threshold, and activate the IAB-DU after the handover.

In a possible implementation, when the distributed unit of the IAB node is in an inactive state, the handover request message is further used to configure the distributed unit of the IAB node to be in an active state.

In the method, if the IAB node located in the unpermitted area determines that the IAB node has entered the first area of the neighboring cell whose signal quality is greater than the threshold, after handing over the IAB node to the neighboring cell whose signal quality is greater than the threshold, the first access network device may further activate the IAB-DU.

In a possible implementation, when the IAB node is located in a second area of the serving cell, and is not located in a third area of any neighboring cell whose signal strength is greater than a threshold, one or more target cells are determined for a terminal device served by the IAB node, where the third area is an area other than an unpermitted area in the neighboring cell; and after the terminal device served by the IAB node is handed over to the one or more target cells, a distributed unit of the IAB node is configured to be in an inactive state.

In the method, if the IAB node that works normally determines that the IAB node moves to the unpermitted area of the serving cell, and is not located in the third area of the any neighboring cell whose signal strength is greater than the threshold, the IAB-MT performs measurement reporting (for example, indicates a location of the IAB-MT) to the first access network device, so that the first access network device can hand over the IAB-MT to another cell or disable the IAB-DU.

In a possible implementation, that the distributed unit of the IAB node is configured to be in an inactive state includes one or more of the following manners: skipping initiating setup of a default radio link control channel; skipping initiating setup of an F1 interface; configuring all cells of the distributed unit of the IAB node to bar access of the terminal device; or skipping configuring a transport network layer association for the distributed unit of the IAB node.

According to a fourth aspect, this application provides an IAB node mobility management method. The method may be performed by an IAB node, may be performed by a component (for example, a processor, a chip, or a chip system) of the IAB node, or may be implemented by a logical module or software that can implement all or some functions of the IAB node. The IAB node receives unpermitted area information in one or more cells, and then initiates a random access process to a first cell, where the first cell is a cell in which the IAB node is located and whose signal quality is best in a cell of a first area of the IAB node, and the first area is an area other than an unpermitted area in the one or more cells.

In the method, the IAB node may receive the unpermitted area information in the one or more cells (the one or more cells herein may belong to a same access network device, or may belong to different access network devices), so that when the IAB-MT is powered on, the IAB-MT can directly select a cell with best signal quality for access, where the IAB-MT is located in a first area of the cell, thereby helping the IAB node to select a serving cell located in a permitted area to work normally under a condition that an unpermitted area constraint exists.

In a possible implementation, when the IAB node is located in a second area of a serving cell, a distributed unit of the IAB node is configured to be in an inactive state; or when the IAB node is located in a first area of the serving cell, the distributed unit of the IAB node is configured to be in an active state. The first area is a permitted, and the second area is an unpermitted area.

In the method, if the IAB node is not located in an area other than an unpermitted area of any cell whose signal strength is greater than a threshold when the IAB node is powered on, the IAB-MT accesses a cell with a best signal, but does not activate the IAB-DU; or if the IAB node is located in an area other than an unpermitted area of any cell whose signal strength is greater than a threshold when the IAB node is powered on, the IAB-MT accesses the cell whose signal strength is greater than the threshold, and activates the IAB-DU.

In a possible implementation, unpermitted area information in a cell of a second access network device is received, where the second access network device includes one or more access network devices adjacent to the first access network device.

In the method, the IAB node may further receive unpermitted area information in a cell of the one or more access network devices adjacent to the first access network device, so as to help determine whether the IAB node is located in an unpermitted area of a serving cell or a neighboring cell.

In a possible implementation, when the IAB node is located in the unpermitted area in the cell of the first access network device and an unpermitted area in the cell of the second access network device, and a trigger condition for handing over the IAB node from the first access network device to the second access network device is met, handover to the second access network device is performed based on a second handover instruction of the first access network device; and it is determined that a distributed unit of the IAB node is in an inactive state.

In the method, if the IAB node is located in an unpermitted area of a serving cell or a neighboring cell, but a handover event (for example, a handover A3/A5 event) occurs, the IAB node is handed over to the neighboring cell, but the IAB-DU is still not activated after the IAB node is handed over.

In a possible implementation, when the IAB node is located in a first area in the cell of the first access network device, first information is sent to the first access network device, where the first information includes one or more of the following information: location information of the IAB node, an identifier of a target cell selected by the IAB node to access, and indication information for requesting to activate a distributed unit of the IAB node; and the distributed unit of the IAB node is activated.

In the method, if the IAB node located in the unpermitted area determines that the IAB node has entered the first area of the serving cell, the IAB-MT performs measurement reporting (for example, indicates a location of the IAB-MT) to the first access network device, to indicate that the IAB-MT expects to restore a DU function, so that the first access network device can activate the IAB-DU.

In a possible implementation, when the IAB node is located in a second area of the serving cell and is located in a third area of a neighboring cell whose signal strength is greater than a threshold, a measurement report of the IAB node and first information are sent to the first access network device; a third handover instruction of the first access network device is received, where the third handover instruction is determined based on the measurement report of the IAB node and the first information; and handover to the second access network device is performed based on the third handover instruction of the first access network device, where the second access network device is an access network device whose access signal quality is best in a third area of the access network device in which the IAB node is located; and the third area is an area other than an unpermitted area in the neighboring cell.

In the method, if the IAB node located in the unpermitted area determines that the IAB node has entered a first area of the neighboring cell whose signal quality is greater than the threshold, the IAB-MT performs measurement reporting (for example, indicates a location of the IAB-MT) to the first access network device, to indicate that the IAB-MT expects to be handed over to the neighboring cell whose signal quality is greater than the threshold, and restores a DU function, so that the first access network device can hand over the IAB node to the neighboring cell whose signal quality is greater than the threshold, and activate the IAB-DU after the handover.

In a possible implementation, when the distributed unit of the IAB node is in an inactive state, the handover request message is further used to configure the distributed unit of the IAB node to be in an active state.

In the method, if the IAB node located in the unpermitted area determines that the IAB node has entered the first area of the neighboring cell whose signal quality is greater than the threshold, the IAB-DU may be activated.

In a possible implementation, when the IAB node is located in a second area of the serving cell, and is not located in a third area of any neighboring cell whose signal strength is greater than a threshold, a terminal device served by the IAB node is handed over to one or more target cells based on a fourth handover instruction of the first access network device, where the third area is an area other than an unpermitted area in the neighboring cell; and it is determined that a distributed unit of the IAB node is in an inactive state.

In the method, if the IAB node that works normally determines that the IAB node moves to the unpermitted area of the serving cell, and is not located in the third area of the any neighboring cell whose signal strength is greater than the threshold, the IAB-MT performs measurement reporting (for example, indicates a location of the IAB-MT) to the first access network device, so that the first access network device can hand over the IAB-MT to another cell or disable the IAB-DU.

In a possible implementation, that it is determined that a distributed unit of the IAB node is in an inactive state includes one or more of the following manners: skipping setting up a default radio link control channel; skipping setting up an F1 interface; configuring all cells of the distributed unit of the IAB node to bar access of the terminal device; or skipping configuring a transport network layer association for the distributed unit of the IAB node.

According to a fifth aspect, this application provides an IAB node mobility management method. The method may be performed by an IAB node, may be performed by a component (for example, a processor, a chip, or a chip system) of the IAB node, or may be implemented by a logical module or software that can implement all or some functions of the IAB node. The IAB node sends location information of the IAB node to a first access network device in which a serving cell is located; when the location information indicates that the IAB node is located in an unpermitted area in the serving cell, receives neighboring cell measurement indication information, where the neighboring cell measurement indication information indicates the IAB node to perform a neighboring cell measurement operation on one or more neighboring cells; and when a neighboring cell measurement result is that signal quality of a first neighboring cell is greater than a threshold and the IAB node is located in a first area of the first neighboring cell, performs handover to the first neighboring cell based on a first handover instruction of the first access network device, where the first area is an area other than an unpermitted area in a cell of the first access network device or a second access network device, and the second access network device includes one or more access network devices adjacent to the first access network device.

In the method, if the IAB node does not receive unpermitted area information of any cell in advance, the IAB node directly selects a cell with a best access signal, and reports location information to the first access network device after the access. If the IAB node is located in a first area of one or more cells, an IAB-MT may be handed over to a cell in which the IAB-MT is located and whose signal quality is best in the first area of the one or more cells.

In a possible implementation, when the IAB node is located in a second area of a serving cell, a distributed unit of the IAB node is configured to be in an inactive state; or when the IAB node is located in a first area of the serving cell, the distributed unit of the IAB node is configured to be in an active state. The first area is a permitted area, and the second area is an unpermitted area.

In the method, if the IAB node is not located in an area other than an unpermitted area of any cell whose signal strength is greater than a threshold when the IAB node is powered on, the IAB-MT accesses a cell with a best signal, but does not activate the IAB-DU; or if the IAB node is located in an area other than an unpermitted area of any cell whose signal strength is greater than a threshold when the IAB node is powered on, the IAB-MT accesses the cell whose signal strength is greater than the threshold, and activates the IAB-DU.

In a possible implementation, unpermitted area information in a cell of the first access network device and unpermitted area information in a cell of a second access network device are received, where the second access network device includes one or more access network devices adjacent to the first access network device.

In the method, the IAB node may further receive the unpermitted area information in the cell of the first access network device and unpermitted area information in a cell of the one or more access network devices adjacent to the first access network device, so as to help determine whether the IAB node is located in an unpermitted area of a serving cell or a neighboring cell.

In a possible implementation, when the IAB node is located in the unpermitted area in the cell of the first access network device and an unpermitted area in the cell of the second access network device, and a trigger condition for handing over the IAB node from the first access network device to the second access network device is met, handover to the second access network device is performed based on a second handover instruction of the first access network device; and it is determined that a distributed unit of the IAB node is in an inactive state.

In the method, if the IAB node is located in an unpermitted area of a serving cell or a neighboring cell, but a handover event (for example, a handover A3/A5 event) occurs, the IAB node is handed over to the neighboring cell, but the IAB-DU is still not activated after the IAB node is handed over.

In a possible implementation, when the IAB node is located in a first area in the cell of the first access network device, first information is sent to the first access network device, where the first information includes one or more of the following information: location information of the IAB node, an identifier of a target cell selected by the IAB node to access, and indication information for requesting to activate a distributed unit of the IAB node; and the distributed unit of the IAB node is activated.

In the method, if the IAB node located in the unpermitted area determines that the IAB node has entered the first area of the serving cell, the IAB-MT performs measurement reporting (for example, indicates a location of the IAB-MT) to the first access network device, to indicate that the IAB-MT expects to restore a DU function, so that the first access network device can activate the IAB-DU.

In a possible implementation, when the IAB node is located in a second area of the serving cell and is located in a third area of a neighboring cell whose signal strength is greater than a threshold, a measurement report of the IAB node and first information are sent to the first access network device; a third handover instruction of the first access network device is received, where the third handover instruction is determined based on the measurement report of the IAB node and the first information; and handover to the second access network device is performed based on the third handover instruction of the first access network device, where the second access network device is an access network device whose access signal quality is best in a third area of the access network device in which the IAB node is located; and the third area is an area other than an unpermitted area in the neighboring cell.

In the method, if the IAB node located in the unpermitted area determines that the IAB node has entered a first area of the neighboring cell whose signal quality is greater than the threshold, the IAB-MT performs measurement reporting (for example, indicates a location of the IAB-MT) to the first access network device, to indicate that the IAB-MT expects to be handed over to the neighboring cell whose signal quality is greater than the threshold, and restores a DU function, so that the first access network device can hand over the IAB node to the neighboring cell whose signal quality is greater than the threshold, and activate the IAB-DU after the handover.

In a possible implementation, when the distributed unit of the IAB node is in an inactive state, the handover request message is further used to configure the distributed unit of the IAB node to be in an active state.

In the method, if the IAB node located in the unpermitted area determines that the IAB node has entered the first area of the neighboring cell whose signal quality is greater than the threshold, the IAB-DU may be activated.

In a possible implementation, when the IAB node is located in a second area of the serving cell, and is not located in a third area of any neighboring cell whose signal strength is greater than a threshold, a terminal device served by the IAB node is handed over to one or more target cells based on a fourth handover instruction of the first access network device, where the third area is an area other than an unpermitted area in the neighboring cell; and it is determined that a distributed unit of the IAB node is in an inactive state.

In the method, if the IAB node that works normally determines that the IAB node moves to the unpermitted area of the serving cell, and is not located in the third area of the any neighboring cell whose signal strength is greater than the threshold, the IAB-MT performs measurement reporting (for example, indicates a location of the IAB-MT) to the first access network device, so that the first access network device can hand over the IAB-MT to another cell or disable the IAB-DU.

In a possible implementation, that it is determined that a distributed unit of the IAB node is in an inactive state includes one or more of the following manners: skipping setting up a default radio link control channel; skipping setting up an F1 interface; configuring all cells of the distributed unit of the IAB node to bar access of the terminal device; or skipping configuring a transport network layer association for the distributed unit of the IAB node.

According to a sixth aspect, this application provides an IAB node mobility management method. The method may be performed by an IAB node, may be performed by a component (for example, a processor, a chip, or a chip system) of the IAB node, or may be implemented by a logical module or software that can implement all or some functions of the IAB node. When the IAB node is located in second areas of all cells whose signal quality is greater than a threshold in a cell of a first access network device, the IAB node initiates a random access process to a second cell of the first access network device, where the second cell is a cell in which the IAB node is located and whose signal quality is best in a cell of a second area of the IAB node; and the second area is an unpermitted area in the cell of the first access network device. The IAB node receives neighboring cell measurement indication information, where the neighboring cell measurement indication information indicates the IAB node to perform a neighboring cell measurement operation on one or more neighboring cells.

In the method, if the IAB node is not located in a first area of any cell whose signal strength is greater than a threshold (that is, an area other than an unpermitted area in the cell) when the IAB node is powered on, the IAB-MT accesses a cell with best signal quality, but does not activate an IAB-DU.

In a possible implementation, when the IAB node is located in a second area of a serving cell, a distributed unit of the IAB node is configured to be in an inactive state; or when the IAB node is located in a first area of the serving cell, the distributed unit of the IAB node is configured to be in an active state. The first area is a permitted area, and the second area is an unpermitted area.

In the method, if the IAB node is not located in an area other than an unpermitted area of any cell whose signal strength is greater than a threshold when the IAB node is powered on, the IAB-MT accesses a cell with a best signal, but does not activate the IAB-DU; or if the IAB node is located in an area other than an unpermitted area of any cell whose signal strength is greater than a threshold when the IAB node is powered on, the IAB-MT accesses the cell whose signal strength is greater than the threshold, and activates the IAB-DU.

In a possible implementation, unpermitted area information in a cell of the first access network device and unpermitted area information in a cell of a second access network device are received, where the second access network device includes one or more access network devices adjacent to the first access network device.

In the method, the IAB node may further receive the unpermitted area information in the cell of the first access network device and unpermitted area information in a cell of the one or more access network devices adjacent to the first access network device, so as to help determine whether the IAB node is located in an unpermitted area of a serving cell or a neighboring cell.

In a possible implementation, when the IAB node is located in the unpermitted area in the cell of the first access network device and an unpermitted area in the cell of the second access network device, and a trigger condition for handing over the IAB node from the first access network device to the second access network device is met, handover to the second access network device is performed based on a second handover instruction of the first access network device; and it is determined that a distributed unit of the IAB node is in an inactive state.

In the method, if the IAB node is located in an unpermitted area of a serving cell or a neighboring cell, but a handover event (for example, a handover A3/A5 event) occurs, the IAB node is handed over to the neighboring cell, but the IAB-DU is still not activated after the IAB node is handed over.

In a possible implementation, when the IAB node is located in a first area in the cell of the first access network device, first information is sent to the first access network device, where the first information includes one or more of the following information: location information of the IAB node, an identifier of a target cell selected by the IAB node to access, and indication information for requesting to activate a distributed unit of the IAB node; and the distributed unit of the IAB node is activated.

In the method, if the IAB node located in the unpermitted area determines that the IAB node has entered the first area of the serving cell, the IAB-MT performs measurement reporting (for example, indicates a location of the IAB-MT) to the first access network device, to indicate that the IAB-MT expects to restore a DU function, so that the first access network device can activate the IAB-DU.

In a possible implementation, when the IAB node is located in a second area of the serving cell and is located in a third area of a neighboring cell whose signal strength is greater than a threshold, a measurement report of the IAB node and first information are sent to the first access network device; a third handover instruction of the first access network device is received, where the third handover instruction is determined based on the measurement report of the IAB node and the first information; and handover to the second access network device is performed based on the third handover instruction of the first access network device, where the second access network device is an access network device whose access signal quality is best in a third area of the access network device in which the IAB node is located; and the third area is an area other than an unpermitted area in the neighboring cell.

In the method, if the IAB node located in the unpermitted area determines that the IAB node has entered a first area of the neighboring cell whose signal quality is greater than the threshold, the IAB-MT performs measurement reporting (for example, indicates a location of the IAB-MT) to the first access network device, to indicate that the IAB-MT expects to be handed over to the neighboring cell whose signal quality is greater than the threshold, and restores a DU function, so that the first access network device can hand over the IAB node to the neighboring cell whose signal quality is greater than the threshold, and activate the IAB-DU after the handover.

In a possible implementation, when the distributed unit of the IAB node is in an inactive state, the handover request message is further used to configure the distributed unit of the IAB node to be in an active state.

In the method, if the IAB node located in the unpermitted area determines that the IAB node has entered the first area of the neighboring cell whose signal quality is greater than the threshold, the IAB-DU may be activated.

In a possible implementation, when the IAB node is located in a second area of the serving cell, and is not located in a third area of any neighboring cell whose signal strength is greater than a threshold, a terminal device served by the IAB node is handed over to one or more target cells based on a fourth handover instruction of the first access network device, where the third area is an area other than an unpermitted area in the neighboring cell; and it is determined that a distributed unit of the IAB node is in an inactive state.

In the method, if the IAB node that works normally determines that the IAB node moves to the unpermitted area of the serving cell, and is not located in the third area of the any neighboring cell whose signal strength is greater than the threshold, the IAB-MT performs measurement reporting (for example, indicates a location of the IAB-MT) to the first access network device, so that the first access network device can hand over the IAB-MT to another cell or disable the IAB-DU.

In a possible implementation, that it is determined that a distributed unit of the IAB node is in an inactive state includes one or more of the following manners: skipping setting up a default radio link control channel; skipping setting up an F1 interface; configuring all cells of the distributed unit of the IAB node to bar access of the terminal device; or skipping configuring a transport network layer association for the distributed unit of the IAB node.

According to a seventh aspect, this application provides a communication apparatus. The communication apparatus is configured to implement the methods performed by the first access network device in the first aspect to the third aspect. The communication apparatus includes one or more functional units, for example, includes a communication unit and a processing unit. For example, the communication unit is configured to send unpermitted area information in a cell of the first access network device to an IAB node. The processing unit is configured to respond to a random access process initiated by the IAB node to a first cell of the first access network device.

For specific descriptions about the methods performed by the first access network device, refer to corresponding descriptions in the first aspect to the third aspect. Details are not described herein again. It may be understood that the communication apparatus may also be configured to implement effect that can be implemented by the first access network device in the first aspect to the third aspect.

According to an eighth aspect, this application provides another communication apparatus. The communication apparatus is configured to implement the methods performed by the IAB node in the fourth aspect to the sixth aspect. The communication apparatus includes one or more functional units, for example, includes a communication unit and a processing unit. For example, the communication unit is configured to receive unpermitted area information in one or more cells. The processing unit is configured to initiate a random access process to a first cell.

For specific descriptions about the methods performed by the IAB node, refer to corresponding descriptions in the fourth aspect to the sixth aspect. Details are not described herein again. It may be understood that the communication apparatus may also be configured to implement effect that can be implemented by the IAB node in the fourth aspect to the sixth aspect.

According to a ninth aspect, this application provides a communication device. The communication device is configured to implement the methods performed by the first access network device in the first aspect to the third aspect. The communication device includes one or more processors and a memory. For example, the memory is coupled to the one or more processors, and the memory stores a computer program. For example, when the one or more processors in the communication device execute the computer program, the communication device performs the following operations:
sending unpermitted area information in a cell of the first access network device to an IAB node; and
responding to a random access process initiated by the IAB node to a first cell of the first access network device, where
the first cell is a cell in which the IAB node is located and whose signal quality is best in a cell of a first area of the IAB node; and
the first area is an area other than an unpermitted area in the cell of the first access network device.

For specific descriptions about the methods performed by the first access network device, refer to corresponding descriptions in the first aspect to the third aspect. Details are not described herein again. It may be understood that the communication device may also be configured to implement effect that can be implemented by the first access network device in the first aspect to the third aspect.

According to a tenth aspect, this application provides another communication device. The communication device is configured to implement the methods performed by the IAB node in the fourth aspect to the sixth aspect. The communication device includes one or more processors and a memory. For example, the memory is coupled to the one or more processors, and the memory stores a computer program. For example, when the one or more processors in the communication device execute the computer program, the communication device performs the following operations:
receiving unpermitted area information in one or more cells; and
initiating a random access process to a first cell, where
the first cell is a cell in which the IAB node is located and whose signal quality is best in a cell of a first area of the IAB node; and
the first area is an area other than an unpermitted area in the one or more cells.

For specific descriptions about the methods performed by the IAB node, refer to corresponding descriptions in the fourth aspect to the sixth aspect. Details are not described herein again. It may be understood that the communication device may also be configured to implement effect that can be implemented by the IAB node in the fourth aspect to the sixth aspect.

According to an eleventh aspect, this application provides a communication system. The communication system includes the first access network device, the second access network device, and/or the IAB node described in the first aspect to the sixth aspect. For specific descriptions about functions implemented by the communication system, refer to descriptions in the first aspect to the sixth aspect. Details are not described herein again.

According to a twelfth aspect, this application provides a computer-readable storage medium. The computer-readable storage medium stores a computer program, and the computer program is executed by a processor to implement the method in any one of the first aspect to the sixth aspect and the possible implementations of the first aspect to the sixth aspect.

According to a thirteenth aspect, this application provides a chip system. The chip system includes a processor, and may further include a memory, and is configured to implement the method in any one of the first aspect to the sixth aspect and the possible implementations of the first aspect to the sixth aspect. The chip system may include a chip, or may include a chip and another discrete component.

According to a fourteenth aspect, this application provides a computer program product including instructions. When the instructions are run on a computer, the computer is enabled to perform the method in any one of the first aspect to the sixth aspect and the possible implementations of the first aspect to the sixth aspect.

According to a fifteenth aspect, this application provides an IAB node mobility management method. The method may be performed by an access network device, may be performed by a component (for example, a processor, a chip, or a chip system) of the access network device, or may be implemented by a logical module or software that can implement all or some functions of the access network device, for example, performed by a first access network device. The first access network device determines that an IAB node is not allowed to provide an IAB service. The first access network device configures a distributed unit of the IAB node to be in an inactive state. The first access network device configures a state of an IAB-MT.

In a possible implementation, an access and mobility management network element notifies the first access network device that the IAB node is not allowed to provide the IAB service. Specifically, the first access network device receives first indication information from the access and mobility management network element, where the first indication information indicates that the IAB node is not allowed to provide the IAB service. The first access network device determines, based on the first indication information, that the IAB node is not allowed to provide the IAB service.

In a possible implementation, the IAB node determines, based on implementation determining, that the IAB service is not allowed to be provided. Specifically, the first access network device receives an RRC message from the IAB node, where the RRC message indicates that the IAB node is not allowed to provide the IAB service. The first access network device determines, based on the RRC message, that the IAB node is not allowed to provide the IAB service.

In a possible implementation, the first access network device determines that the IAB node is not allowed to provide the IAB service. Specifically, the first access network device receives second indication information from a management device, where the second indication information indicates that the IAB node is not allowed to provide the IAB service in a specified location area and/or within a specified time. The first access network device determines, based on the second indication information and location information of the IAB node or time information, that the IAB node is not allowed to provide the IAB service.

In a possible implementation, that the first access network device configures a distributed unit of the IAB node to be in an inactive state includes one or more of the following manners: skipping initiating setup of a default radio link control channel; setting up a default radio link control channel for the IAB-MT, but skipping allocating a BAP address and/or a default BAP routing identifier (default BAP routing ID); setting up a default radio link control channel for the IAB-MT, and allocating a BAP address and a default BAP routing ID, but skipping allocating an IP address; setting up a default radio link control channel for the IAB-MT, allocating a BAP address and a default BAP routing ID, and allocating an IP address, but skipping configuring a transport network layer association for the distributed unit of the IAB node; setting up a default radio link control channel for the IAB-MT, allocating a BAP address and a default BAP routing ID, allocating an IP address, and configuring a transport network layer association, but skipping initiating setup of an F1 interface; or setting up a default radio link control channel for the IAB-MT, allocating a BAP address and a default BAP routing ID, allocating an IP address, configuring a transport network layer association, and setting up an F1 interface, but configuring all cells of the distributed unit of the IAB node to bar access of a terminal device.

In a possible implementation, that the first access network device configures a state of an IAB-MT includes one or more of the following: When the distributed unit of the IAB node is in an inactive state, the first access network device configures the IAB-MT to be in a connected state; or the first access network device sends an RRC release message to the IAB-MT, where the RRC release message is used to release the IAB-MT to an idle state (IDLE) or an inactive state (INACTIVE). Optionally, the RRC release message may indicate the MT to periodically restore to a connected state.

In a possible implementation, when the IAB node is not allowed to provide the IAB service when being initially powered on, and is allowed to provide the IAB service in a subsequent phase, the first access network device determines that the IAB node is allowed to provide the IAB service. The first access network device configures the distributed unit of the IAB node to be in an active state.

In a possible implementation, an access and mobility management network element notifies the first access network device that the IAB node is allowed to provide the IAB service. Specifically, the first access network device receives third indication information from the access and mobility management network element, where the third indication information indicates that the IAB node is allowed to provide the IAB service. The first access network device determines, based on the third indication information, that the IAB node is allowed to provide the IAB service.

In a possible implementation, the IAB node determines, based on implementation determining, that the IAB service is allowed to be provided. Specifically, the first access network device receives an RRC message from the IAB node, where the RRC message indicates that the IAB node is allowed to provide the IAB service. The first access network device determines, based on the RRC message, that the IAB node is allowed to provide the IAB service.

In a possible implementation, the first access network device determines that the IAB node is allowed to provide the IAB service. Specifically, the first access network device receives second indication information from a management device, where the second indication information indicates that the IAB node is not allowed to provide the IAB service in a specified location area and/or within a specified time. The first access network device determines, based on the second indication information and location information of the IAB node or time information, that the IAB node is allowed to provide the IAB service.

According to a sixteenth aspect, this application provides an IAB node mobility management method. The method may be performed by an access network device, may be performed by a component (for example, a processor, a chip, or a chip system) of the access network device, or may be implemented by a logical module or software that can implement all or some functions of the access network device, for example, performed by a first access network device. The first access network device determines that an IAB node is not allowed to provide an IAB service. The first access network device configures the distributed unit of the IAB node to be in a deactivated state.

In a possible implementation, when the first access network device determines that the IAB node is changed from being allowed to provide the IAB service to not being allowed to provide the IAB service, that the first access network device configures the distributed unit of the IAB node to be in a deactivated state includes one or more of the following manners: The first access network device indicates an IAB-MT to delete a radio link control channel of a backhaul link; the first access network device indicates the IAB-MT to delete a BAP address and a default BAP routing identifier (default BAP routing ID); the first access network device indicates the IAB-MT to delete an IP address; the first access network device deletes a transport network layer association of the IAB node; the first access network device deletes an F1 interface between the first access network device and the IAB node; or the first access network device configures all cells of an IAB-DU to bar access of a terminal device.

According to a seventeenth aspect, this application provides a communication apparatus. The communication apparatus is configured to implement the method performed by the first access network device in any one of the fifteenth aspect and the sixteenth aspect, and the possible implementations of the fifteenth aspect and the sixteenth aspect. The communication apparatus includes one or more functional units, for example, includes a communication unit and a processing unit. For specific descriptions of the method performed by the first access network device, refer to corresponding descriptions in any one of the fifteenth aspect and the sixteenth aspect, and the possible implementations of the fifteenth aspect and the sixteenth aspect. Details are not described herein again. It may be understood that the communication apparatus may also implement effect that can be implemented by the first access network device in any one of the fifteenth aspect and the sixteenth aspect, and the possible implementations of the fifteenth aspect and the sixteenth aspect.

According to an eighteenth aspect, this application provides a communication device. The communication device is configured to implement the method performed by the first access network device in any one of the fifteenth aspect and the sixteenth aspect, and the possible implementations of the fifteenth aspect and the sixteenth aspect. The communication device includes one or more processors and a memory. Optionally, the memory is coupled to the one or more processors, and the memory stores a computer program. For specific descriptions of the method performed by the first access network device, refer to corresponding descriptions in any one of the fifteenth aspect and the sixteenth aspect, and the possible implementations of the fifteenth aspect and the sixteenth aspect. Details are not described herein again. It may be understood that the communication device may also implement effect that can be implemented by the first access network device in any one of the fifteenth aspect and the sixteenth aspect, and the possible implementations of the fifteenth aspect and the sixteenth aspect.

### BRIEF DESCRIPTION OF DRAWINGS

FIG. 1 is a diagram of a communication system according to this application;
FIG. 2 is a diagram of an IAB network;
FIG. 3 is a schematic flowchart of a first IAB node mobility management method according to this application;
FIG. 4 is a schematic flowchart of a second IAB node mobility management method according to this application;
FIG. 5 is a schematic flowchart of a third IAB node mobility management method according to this application;
FIG. 6 is a schematic flowchart of a fourth IAB node mobility management method according to this application;
FIG. 7a is a schematic flowchart of a fifth IAB node mobility management method according to this application;
FIG. 7b is a schematic flowchart of a sixth IAB node mobility management method according to this application;
FIG. 7c is a schematic flowchart of a seventh IAB node mobility management method according to this application;
FIG. 7d is a schematic flowchart of an eighth IAB node mobility management method according to this application;
FIG. 8 is a diagram of a communication apparatus according to this application; and
FIG. 9 is a diagram of a communication device according to this application.

### DESCRIPTION OF EMBODIMENTS

In this application, "/" may represent an "or" relationship between associated objects. For example, A/B may represent A or B. In addition, "and/or" may indicate that there are three relationships between associated objects. For example, A and/or B may represent the following three cases: Only A exists, both A and B exist, and only B exists, where A and B may be singular or plural. For ease of description of technical solutions of this application, in this application, terms such as "first" and "second" may be used to distinguish between technical features with same or similar functions. The terms such as "first" and "second" do not limit a quantity and an execution sequence, and the terms such as "first" and "second" do not limit a definite difference. In this application, the term such as "example" or "for example" is used to represent an example, an illustration, or a description. Any embodiment or design scheme described as "example" or "for example" should not be explained as being more preferred or having more advantages than another embodiment or design scheme. The term such as "example" or "for example" is used to present a related concept in a specific manner for ease of understanding.

The following describes the technical solutions of this application with reference to accompanying drawings.

In an integrated access and backhaul (integrated access and backhaul, IAB) technology, when an IAB node is located in an unpermitted area, the IAB node is not allowed to provide a service for user equipment UE (user equipment, UE). However, the range of the unpermitted area is not described currently. Therefore, when the IAB node is powered on or encounters a cell-related unpermitted area less than or equal to a cell granularity during normal operation, how to select a cell for access or how to perform cell handover becomes a problem to be resolved.

To resolve the foregoing problem, this application provides an IAB node mobility management method. In the method, a first access network device may directly indicate unpermitted area information of a current cell to an IAB node, so that when an IAB mobile terminal (IAB mobile termination, IAB-MT) is powered on, the IAB-MT can directly select a cell with best signal quality for access, where the IAB mobile terminal is located in a first area of the cell, thereby helping the IAB node to select a serving cell located in a permitted area to work normally under a condition that an unpermitted area constraint exists. Alternatively, if a first access network device does not directly indicate unpermitted area information of a current cell to an IAB node, the IAB node directly selects a cell with a best access signal, and reports location information to the first access network device after access, and then the first access network device determines whether to hand over an IAB-MT to a cell that is located in a first area of the cell and whose signal quality is best.

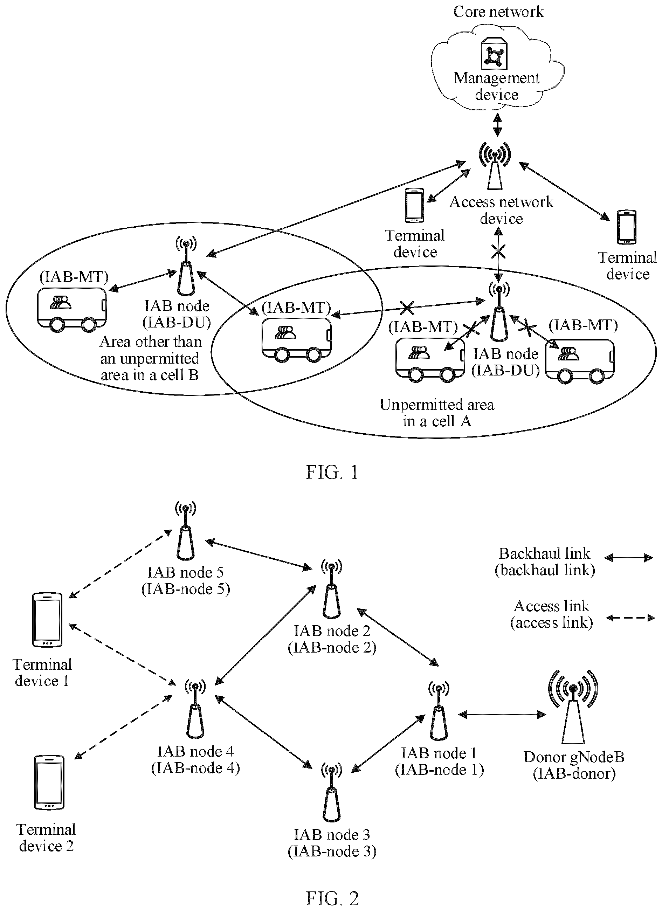

The IAB node mobility management method provided in this application may be applied to a communication system. The communication system includes but is not limited to an access network device, an IAB node, a management device, a terminal device, and the like. For example, the communication system shown in FIG. 1 includes an access network device (for example, a first access network device), a plurality of IAB nodes (including an IAB-MT and an IAB distributed unit (IAB distributed unit, IAB-DU)), a management device (for example, an operation, administration and maintenance (operation, administration and maintenance, OAM)), and a plurality of terminal devices. After accessing a serving cell, the IAB node is located in an unpermitted area of the serving cell. In this case, access of the IAB-MT is allowed, and the IAB-DU is set to an inactive state. Alternatively, after the IAB node accesses a serving cell, if the IAB node is located in a first area of the serving cell (that is, an area other than an unpermitted area in the serving cell, where the first area in this application may also be referred to as a permitted area), access of the IAB-MT is allowed, and the IAB-DU is set to an active state. It may be understood that the communication system shown in FIG. 1 is merely an example. The communication system may further include a plurality of access network devices (for example, the first access network device and a second access network device adjacent to the first access network device), and the plurality of IAB nodes may alternatively choose to access the second access network device.

The terminal device may be UE, a terminal, a mobile phone, an internet of things terminal device (for example, a vehicle-mounted device or a wearable device), a terminal device in a 5G network, a terminal device in a future evolved PLMN network, a terminal device in a next generation network (for example, 6G), or the like. A radio access network device may be a device that can communicate with the terminal device. The radio access network device may be a base station (base station, BS), a relay station, or an access point (access point, AP). The base station may be an evolved NodeB (eNB or eNodeB for short) in a long term evolution (long term evolution, LTE) system, or may be a gNodeB in a new radio (new radio, NR) network, or may be a radio controller in a cloud radio access network (cloud radio access network, CRAN) scenario, or may be an AP in a wireless fidelity (wireless fidelity, Wi-Fi) network, a BS in a worldwide interoperability for microwave access (worldwide interoperability for microwave access, WiMAX) network, or the like. An AS is mainly responsible for providing an application service. A UPF is mainly responsible for processing a user packet, such as forwarding and charging.

The access network device may be a device that can communicate with the terminal device or the IAB node. The access network device may be a base station, a relay station, or an access point. The base station may be a base transceiver station (base transceiver station, BTS) in a global mobile communications (global system for mobile communications, GSM) system or a code division multiple access (code division multiple access, CDMA) network, or may be a 3G NodeB (NodeB) in a wideband code division multiple access (wideband code division multiple access, WCDMA) system, or may be an evolved NodeB (eNB or eNodeB for short) in a long term evolution (long term evolution, LTE) system. Alternatively, the access network device may be a satellite in a satellite communication system. Alternatively, the access network device may be a radio controller in a cloud radio access network (cloud radio access network, CRAN) scenario. Alternatively, the access network device may be an access network device in a 5G network or an access network device (for example, a gNodeB) in a future evolved public land mobile network (public land mobile network, PLMN) network. Altematively, the access network device may be a wearable device, an unmanned aerial vehicle, a device in the internet of vehicles (for example, a vehicle-to-everything (vehicle-to-everything, V2X) device), a communication device in device-to-device (device-to-device, D2D) communication, or an access network device applied to a future communication system.

The IAB node (IAB-node) is also referred to as a relay node (relay node, RN), and may provide a radio access service for the UE. Service data of the UE is transmitted by the IAB-node by connecting to an IAB donor (IAB-donor) over a wireless backhaul link. In this application, the IAB donor is also referred to as a donor gNodeB (donor gNodeB, DgNB). The IAB-node includes an MT part and a DU part. When being oriented to a parent node of the IAB-node, the IAB-node may serve as the terminal device, that is, a role of the MT. When being oriented to a child node of the IAB-node (the child node may be another IAB-node, or the UE), the IAB-node may serve as the network device, that is, a role of the DU. The donor gNodeB DgNB may be an access network device having a complete base station function, or may be an access network device in a form of separation of a central unit (central unit, CU) and a distributed unit (distributed unit, DU). The donor gNodeB is connected to a core network serving the UE.

The management device is a device (for example, including an access and mobility management function (access and mobility management function, AMF) network element) in the core network, may communicate with the access network device, and is mainly used for information management (for example, managing unpermitted area information of the access network device), information exchange (for example, delivering the unpermitted area information of the access network device or unpermitted area information of a neighboring access network device to the access network device), quality of service (quality of service, QoS) control, and the like.

### I. Related concepts in this application.

1. Communication system:
   For example, the communication system in this application may be a global mobile communications (global system for mobile communications, GSM) system or a code division multiple access (code division multiple access, CDMA) network, may be a wideband code division multiple access (wideband code division multiple access, WCDMA) system, may be a long term evolution (long term evolution, LTE) system, or may be a satellite communication system. For another example, the communication system may be a cloud radio access network (cloud radio access network, CRAN), a 5th generation (5th generation, 5G) communication system, or a future evolved public land mobile network (public land mobile network, PLMN) system, or may be a vehicle-to-everything (vehicle-to-everything, V2X) system, a device-to-device (device-to-device, D2D) communication system, or a future communication system.
2. IAB network:
   The IAB network includes an IAB node (IAB-node, also referred to as a relay node (relay node, RN)) and a terminal device. A link between the IAB node and the terminal device is referred to as an access link (access link, also referred to as a wireless access link), and a link between IAB nodes is referred to as a backhaul link (backhaul link, also referred to as a wireless backhaul link). The IAB node may provide a wireless access service for the terminal device, and service data of the terminal device is transmitted by the IAB-node by connecting to an IAB donor (IAB-donor) over a wireless backhaul link. For example, FIG. 2 is a diagram of an IAB network. The IAB network includes an IAB-donor, an IAB-node (for example, an IAB node 1 to an IAB node 5 in FIG. 2), and a terminal device (for example, a terminal device 1 and a terminal device 2 in FIG. 2). One transmission path between the terminal device and the IAB-donor may include one or more IAB-nodes. Each IAB-node needs to maintain a wireless backhaul link oriented to a parent node and a wireless access link oriented to a child node. If a child node of the IAB-node is a terminal device, a wireless access link exists between the IAB-node and the child node (that is, the terminal device). If a child node of the IAB-node is another IAB-node, a wireless backhaul link exists between the IAB-node and the child node (that is, the another IAB-node). For example, one transmission path shown in FIG. 2 may include a "terminal device 1→IAB-node 4→IAB-node 3→IAB-node 1→IAB-donor". The terminal device 1 is connected to the IAB-node 4 over a wireless access link, the IAB-node 4 is connected to the IAB-node 3 over a wireless backhaul link, the IAB-node 3 is connected to the IAB-node 1 over a wireless backhaul link, and the IAB-node 1 is connected to the IAB-donor over a wireless backhaul link.
3. Unpermitted area related to a cell granularity:
   An existing standard does not describe the range of the unpermitted area (unpermitted area). Therefore, there may be an unpermitted area less than a cell granularity, and the unpermitted area less than the cell granularity may be related to a cell (cell-specific). For example, an unpermitted area shown in FIG. 1 is less than a cell granularity. There may be the following case: A location belongs to an unpermitted area of a cell A, but does not belong to an unpermitted area of a cell B (for example, an overlap of two oval areas in FIG. 1). When the IAB node is located at the location, if an IAB-MT accesses the cell A, the IAB node is barred from working; or if the IAB-MT accesses the cell B, the IAB node is allowed to work. For the unpermitted area less than the cell granularity, an area in the cell other than the unpermitted area may be referred to as a permitted area (permitted area). When the IAB node is located in this location, if the IAB-MT accesses the cell A, the IAB node is allowed to work.

II. Assuming that an IAB node is located in an area other than an unpermitted area in a potential access cell of an IAB-MT, the IAB node selects a cell to access.

### 1. A system message of a cell carries unpermitted area information of the cell.

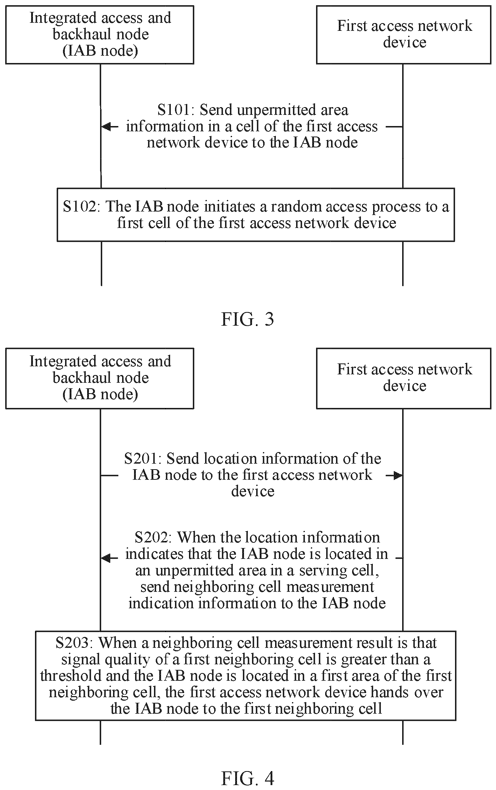

For example, FIG. 3 is a schematic flowchart of a first IAB node mobility management method according to this application. The method may be implemented through interaction between a first access network device (for example, a DgNB) and an IAB node, and includes the following steps.

S101: The first access network device sends unpermitted area information in a cell of the first access network device to the IAB node.

Correspondingly, the IAB node receives the unpermitted area information in the cell of the first access network device. The unpermitted area information in the cell of the first access network device may include but is not limited to information such as a longitude and a latitude of an unpermitted area. For example, the first access network device may include one or more cells. It is assumed that the first access network device includes a plurality of cells: a cell A-1, a cell A-2, and a cell A-3. In this case, the unpermitted area information in the cell of the first access network device includes information such as a longitude and a latitude of an unpermitted area of the cell A-1, a longitude and a latitude of an unpermitted area of the cell A-2, and a longitude and a latitude of an unpermitted area of the cell A-3.

In a possible implementation, the unpermitted area information in the cell of the first access network device may be carried in a system message of the cell. For example, in this application, an iab-unpermitted area information element may be introduced into a SIB1 system message of the cell, and the iab-unpermitted area information element carries an unpermitted area message of the cell. In this case, step 101 may be, for example, as follows: The first access network device sends the SIB1 system message of the cell to the IAB node, where the system message includes the iab-unpermitted area information element, and the iab-unpermitted area information element carries unpermitted area messages of the cell A-1, the cell A-2, and the cell A-3. It may be understood that the system message may further carry other information of the cell, for example, signal quality of the cell. This is not limited in this embodiment.

In a possible implementation, the unpermitted area information in the cell of the first access network device may be delivered by a management device to the first access network device, so that the first access network device learns of the unpermitted area information within a control range of the first access network device. For example, the management device sends the unpermitted area information in the cell of the first access network device to the first access network device. Optionally, the management device may further send unpermitted area information in a cell of a second access network device to the first access network device, where the second access network device includes one or more access network devices adjacent to the first access network device.

In a possible implementation, the first access network device may send the unpermitted area information in the cell of the first access network device to the second access network device. Correspondingly, the second access network device may also send the unpermitted area information in the cell of the second access network device to the first access network device, so that neighboring access network devices can exchange unpermitted area information within their respective ranges.

Optionally, after S101, the IAB node and the first access network device may further perform steps of selecting a target cell. For example, the following steps are included:
s11: When the IAB node is located in a first area in the cell of the first access network device, the IAB node sends, to the first access network device, location information of the IAB node and/or an identifier of a target cell selected by the IAB node to access.
s12: The first access network device determines a first cell based on the location information of the IAB node and/or the identifier of the target cell selected by the IAB node to access.

The first cell is a cell in which the IAB node is located and whose signal quality is best in a cell of a first area of the IAB node; and the first area is an area other than an unpermitted area in the cell of the first access network device. In other words, the first cell is a target cell to be accessed by the IAB node. It may be understood that, when the IAB node sends the location information of the IAB node to the first access network device, it indicates that the first access network device determines, based on the location information of the IAB node, the target cell to be accessed by the IAB node. When the IAB node sends, to the first access network device, the identifier of the target cell selected by the IAB node to access, it indicates that the IAB-MT selects the to-be-accessed target cell. It should be noted that, generally, common UE cannot select a target cell, but the IAB-MT may be considered as a network device, and the IAB-MT may directly determine the target cell.

S102: The IAB node initiates a random access process to the first cell of the first access network device.

Correspondingly, the first access network device responds to the random access process initiated by the IAB node to the first cell of the first access network device. That is, when an IAB node is located in an area other than an unpermitted area in a cell of the IAB node in a potential access cell of the IAB-MT, the IAB node may initiate a random access process to a cell with best signal quality in the potential access cell of the IAB-MT. Correspondingly, the first access network device responds to the random access process initiated by the IAB node to the first cell of the first access network device. For a specific implementation of initiating, by the IAB node, the random access process to the first cell, refer to an existing random access process. This is not limited in this embodiment.

In a possible implementation, after S102, the method may further include: The IAB node and the first access network device perform a subsequent step of accessing the IAB node. For example, after the IAB node accesses a serving cell, the first access network device may configure a distributed unit of the IAB node to be in an active state. Specifically, that the first access network device configures the distributed unit of the IAB node to be in an active state may include but is not limited to the following manners:
Manner 1: The IAB-MT sets up a default radio link control channel (default radio link control channel, default RLC CH). For example, the IAB-MT receives indication information, which indicates the IAB-MT to set up the default RLC CH. Correspondingly, the first access network device configures the default RLC CH.
Manner 2: The IAB-DU sets up an F1 interface with the first access network device. For example, the IAB-DU initiates, to the first access network device, an operation of setting up the F1 interface. Correspondingly, the first access network device configures the F1 interface.
Manner 3: The first access network device configures all cells of the IAB-DU to allow access of a terminal device.
Manner 4: The first access network device configures a transport network layer (transport network layer, TNL) association (TNL association) for the IAB-DU. For example, when sending a data packet to a donor CU, the IAB-DU may insert a source TNL (source TNL) address of the IAB-DU and a target TNL (target TNL) address of the donor CU into a packet header, that is, a TNL association indicates that the IAB node may set up a connection relationship with the donor CU at a TNL layer. In a possible example of Manner 4, the first access network device allocates a source transport network layer address (source TNL address) to the IAB-DU.
Manner 5: The first access network device allocates a BAP address and a default BAP routing identifier (default BAP routing ID) to the IAB node. For example, the DgNB sends an RRC message to the IAB-MT, where the message is used to allocate the BAP address and the default BAP routing ID to the IAB-MT.
Manner 6: The first access network device allocates an IP address to the IAB node. For example, the DgNB sends an RRC message to the IAB-MT, where the RRC message is used to allocate the IP address to the IAB-MT.

The foregoing six manners need to be executed in a specific sequence. The execution sequence is as follows:
Step 1: The IAB-MT sets up a default radio link control channel (default radio link control channel, default RLC CH). For example, the IAB-MT receives indication information, which indicates the IAB-MT to set up the default RLC CH. Correspondingly, the first access network device configures the default RLC CH.
Step 2: Allocate a BAP address and a default BAP routing identifier (default BAP routing ID). For example, the DgNB sends an RRC message to the IAB-MT, where the message is used to allocate the BAP address and the default BAP routing ID to the IAB-MT.
Step 3: Allocate an IP address. For example, the DgNB sends an RRC message to the IAB-MT, where the RRC message is used to allocate the IP address to the IAB-MT.
Step 4: The first access network device configures a transport network layer (transport network layer, TNL) association (TNL association) for the IAB-DU.
Step 5: The IAB-DU sets up an F1 interface with the first access network device. For example, the IAB-DU initiates, to the first access network device, an operation of setting up the F1 interface. Correspondingly, the first access network device configures the F1 interface.
Step 6: The first access network device configures all cells of the IAB-DU to allow access of a terminal device. For example, the DgNB sets the cells of the IAB-DU to notBarred, to allow to provide a service for common UE; and sets a cell iab-support to present (true), to allow to provide a service for another IAB-MT.

It can be learned that, as described in this embodiment, when the IAB node is located in the area other than the unpermitted area in the cell of the IAB node in the potential access cell of the IAB-MT, if the first access network device directly sends the unpermitted area information in the cell of the first access network device to the IAB node, the IAB node may directly select a cell that is located in a permitted area and whose signal quality is best for access. In this way, the IAB node can select a serving cell located in the permitted area to work normally under a condition that an unpermitted area constraint exists.

### 2. A system message of a cell does not carry unpermitted area information of the cell.

For example, FIG. 4 is a schematic flowchart of a second IAB node mobility management method according to this application. The method may be implemented through interaction between a first access network device (for example, a DgNB) and an IAB node, and includes the following steps.

S201: The IAB node sends location information of the IAB node to the first access network device.

The location information of the IAB node may include information that may indicate a location of the IAB node, such as longitude information and latitude information of the IAB node. For example, when the IAB node is powered on, the current location information may be obtained by using a global navigation satellite system (global navigation satellite system, GNSS).

In a possible implementation, before the IAB node sends the location information of the IAB node to the first access network device, the IAB node may first receive a system message of one or more cells, to learn of a potential access cell of the IAB node, and select a cell with best signal quality from the potential access cell for access. For example, the IAB node receives SIB1 system messages of a plurality of cells, and the system messages of the cells include information such as signal quality of the cells. The IAB node selects, based on the system messages, a cell with best signal quality to initiate a random access process. The plurality of cells may belong to a same access network device (for example, belong to the first access network device), or may belong to different access network devices (for example, belong to the first access network device and a second access network device). It may be understood that a cell accessed by the IAB node is a serving cell of the IAB node. In this embodiment, it is assumed that the serving cell of the IAB node is a cell controlled by a donor gNodeB (that is, the first access network device). In this case, after the IAB node accesses the serving cell, the IAB node may send the location information of the IAB node to the first access network device.

S202: When the location information indicates that the IAB node is located in an unpermitted area in the serving cell, the first access network device sends neighboring cell measurement indication information to the IAB node.

After receiving the location information of the IAB node, the first access network device may determine, based on the location information of the IAB node and with reference to unpermitted area information in the serving cell and unpermitted area information in a neighboring cell, whether the IAB node is located in the unpermitted area in the serving cell.

In a possible case, when the IAB node is located in the unpermitted area in the serving cell and is located in an area other than an unpermitted area in the neighboring cell, the first access network device sends the neighboring cell measurement indication information to the IAB node. The neighboring cell measurement indication information indicates the IAB node to perform a neighboring cell measurement operation on one or more neighboring cells. Correspondingly, after receiving the neighboring cell measurement indication information, the IAB node may perform neighboring cell measurement on all neighboring cells, where the IAB node is located in permitted areas of the neighboring cells, that is, if the IAB node is located in a permitted area of a neighboring cell, the IAB node may perform neighboring cell measurement on the neighboring cell.

In another possible case, when the IAB node is located in an area other than the unpermitted area in the serving cell, it indicates that the serving cell can normally provide a service for the IAB node. In this case, the IAB node does not need to perform an additional operation.

In a possible implementation, the IAB node may receive unpermitted area information in a cell of the first access network device and unpermitted area information in a cell of a second access network device, where the second access network device includes one or more access network devices adjacent to the first access network device. That is, the IAB node may learn of unpermitted area information of the serving cell and unpermitted area information of the neighboring cell, thereby facilitating neighboring cell measurement.

S203: When a neighboring cell measurement result is that signal quality of a first neighboring cell is greater than a threshold and the IAB node is located in a first area of the first neighboring cell, the first access network device hands over the IAB node to the first neighboring cell.

The first neighboring cell is a target neighboring cell determined from the one or more neighboring cells on which the IAB node performs neighboring cell measurement, and the first area is an area other than an unpermitted area in the cell of the first access network device. For example, if a neighboring cell whose signal quality is greater than a threshold exists in a measurement report of the IAB node, the IAB node is handed over to the first neighboring cell with best signal quality, and the IAB node is located in an area other than an unpermitted area in the first neighboring cell. It may be understood that, if the first neighboring cell is a cell other than the serving cell controlled by the first access network device, the first neighboring cell is a cell with best signal quality in a neighboring cell whose signal quality is greater than a threshold, and the IAB node is located in an area other than an unpermitted area in the cell, the first access network device hands over the IAB node to the first neighboring cell.

In a possible implementation, after S203, the method may further include: The IAB node and the first access network device perform a subsequent step of accessing the IAB node. For example, after the IAB node accesses a serving cell, the first access network device may configure a distributed unit of the IAB node to be in an active state. For a specific implementation, refer to corresponding descriptions in the foregoing embodiment. Details are not described herein again.

It can be learned that, as described in this embodiment, when the IAB node is located in the area other than the unpermitted area in the cell of the IAB node in the potential access cell of the IAB-MT, if the first access network device does not send the unpermitted area information in the cell of the first access network device to the IAB node, the IAB-MT first accesses a cell with best signal quality and then reports a location, and the first access network device determines whether the IAB-MT needs to be handed over to another cell. In this way, the IAB node can select a serving cell located in the permitted area to work normally under a condition that an unpermitted area constraint exists.

**III.** Assuming that an IAB-MT is not located in an area other than an unpermitted area in any potential access cell, an IAB node selects a cell to perform an access or handover process.

### 1. The IAB node selects a cell to perform an access process.

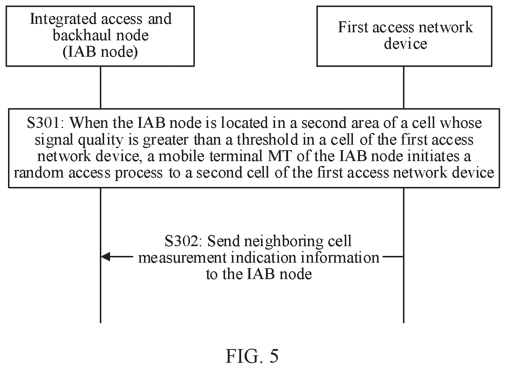

For example, FIG. 5 is a schematic flowchart of a third IAB node mobility management method according to this application. The method may be implemented through interaction between a first access network device (for example, a DgNB) and an IAB node, and includes the following steps.

S301: When the IAB node is located in a second area of a cell whose signal quality is greater than a threshold in a cell of the first access network device, a mobile terminal MT of the IAB node initiates a random access process to a second cell of the first access network device.

The second cell is a cell in which the IAB node is located and whose signal quality is best in a cell of a second area of the IAB node, and the second area is an unpermitted area in the cell of the first access network device (it may be understood that the second area in this application may be referred to as an unpermitted area). That is, when the IAB node is powered on, if the IAB-MT is not located in an area other than an unpermitted area of any potential access cell (that is, the IAB-MT is located in the unpermitted area of the any potential access cell), the IAB node directly accesses a cell with best signal quality in the potential access cell. Specifically, the following two implementations may be included:
Manner 1: If the IAB-MT receives, according to the solution described in the subsection 1 in the part II, unpermitted area information in the cell of the first access network device, and the IAB-MT finds that the IAB-MT is not located in the area other than the unpermitted area of the any potential access cell, the IAB-MT directly initiates a random access process to a cell with best signal quality (that is, the second cell).
Manner 2: If the IAB-MT directly accesses a cell with best signal quality according to the solution described in the subsection 2 in the part II, but the first access network device determines that the IAB-MT is located in unpermitted areas of all potential access cells, the IAB-MT stays in the cell.

S302: The first access network device sends neighboring cell measurement indication information to the IAB node.

The neighboring cell measurement indication information indicates the IAB node to perform a neighboring cell measurement operation on one or more neighboring cells. In this case, the IAB node is located in an unpermitted area, and the first access network device may indicate the IAB node to start neighboring cell measurement, so that the IAB node can be handed over to a neighboring cell located in a permitted area. In this way, the IAB node can select a serving cell located in the permitted area to work normally under a condition that an unpermitted area constraint exists. For example, the first access network device sends a radio resource control (radio resource control, RRC) message to the IAB node, where the RRC message includes unpermitted area information of a serving cell of the IAB-MT and unpermitted area information of all neighboring cells, and sends a neighboring cell measurement indication message to indicate the IAB-MT to start neighboring cell measurement.

In a possible implementation, the first access network device may send unpermitted area information in a cell of the first access network device and unpermitted area information in a cell of a second access network device to the IAB node, where the second access network device includes one or more access network devices adjacent to the first access network device. That is, the IAB node may learn of unpermitted area information of the serving cell and unpermitted area information of the neighboring cell, thereby helping the IAB node to perform neighboring cell measurement.

In a possible implementation, after S302, the method may further include: The IAB node and the first access network device perform a subsequent step of accessing the IAB node. For example, after the IAB node accesses a second cell, the first access network device may configure a distributed unit of the IAB node to be in an inactive state. Specifically, that the first access network device configures the distributed unit of the IAB node to be in an inactive state may include but is not limited to the following manners:
Manner 1: The IAB-MT does not set up a default radio link control channel (default radio link control channel, default RLC CH). For example, the IAB-MT receives indication information, which indicates the IAB-MT not to set up the default RLC CH. Correspondingly, the first access network device does not configure the default RLC CH.
Manner 2: The IAB-DU does not set up an F1 interface with the first access network device. For example, the IAB-DU does not initiate, to the first access network device, an operation of setting up the F1 interface. Correspondingly, the first access network device does not configure the F1 interface. When the IAB-DU does not set up the F1 interface with the first access network device, the first access network device may set up a default RLC CH for the IAB-MT, allocate a BAP address and a default BAP routing ID, allocate an IP address, and configure a TNL association. In a possible implementation, the DgNB sends an RRC message to the IAB-MT, where the RRC message indicates the DU part of the IAB-node not to send an F1 interface setup request message (F1 SETUP REQUEST). In another possible implementation, if the IAB-DU has sent F1 SETUP REQUEST, the DgNB feeds back an F1 interface setup failure message (F1 SETUP FAILURE) to the IAB-DU. Optionally, a cause field in the F1 SETUP FAILURE message may indicate that a setup failure cause is that the IAB node to which the IAB-DU belongs is not allowed to work as the IAB node.
Manner 3: The first access network device configures all cells of the IAB-DU to bar access of a terminal device. For example, the DgNB sets the cells of the IAB-DU to cellBarred, to reject providing a service for common UE; and sets a cell iab-support to absent (false), to reject providing a service for another IAB-MT. When the first access network device configures all the cells of the IAB-DU to bar access of the terminal device, the first access network device may set up a default RLC CH for the IAB-MT, allocate a BAP address and a default BAP routing ID, allocate an IP address, configure a TNL association, and set up an F1 interface.
Manner 4: The first access network device does not configure a transport network layer (transport network layer, TNL) association (TNL association) for the IAB-DU. For example, the first access network device does not allocate a source transport network layer address (source TNL address) to the IAB-DU. When the first access network device does not configure the TNL association for the IAB-DU, the first access network device may set up a default RLC CH for the IAB-MT, allocate a BAP address and a default BAP routing ID, and allocate an IP address. In a possible implementation, the DgNB sends an RRC message to the IAB-MT, where the RRC message indicates the DU part of the IAB-node not to initiate setup of the TNL association. In another possible implementation, if the IAB-DU has sent a TNL association setup request message, correspondingly, the DgNB receives the TNL association setup request message, and returns an association setup reject message to the IAB-DU.
Manner 5: The first access network device sets up a default RLC CH for the IAB-MT, but does not allocate a BAP address and/or a default BAP routing identifier (default BAP routing ID). For example, the IAB-MT receives indication information, indicating not to allocate a BAP address and/or a default BAP routing ID to the IAB-MT.
Manner 6: The first access network device sets up a default RLC CH for the IAB-MT, and allocates a BAP address and a default BAP routing ID, but does not allocate an IP address. As stipulated in an existing protocol, the IAB-MT may send an RRC message to the DgNB, to request an IP address (for example, by using an IABOtherInformation message). Correspondingly, the DgNB may return the IP address to the IAB-MT by using the RRC message. In this manner, no IP address is allocated. In a possible implementation, the DgNB sends an RRC message to the IAB-MT, where the RRC message indicates the IAB-MT not to request an IP address, for example, indicate the IAB-MT not to send an IABOtherInformation message. In another possible implementation, if the IAB-MT has sent a message to request an IP address, correspondingly, the DgNB receives the message, and returns, to the IAB-MT, an RRC message indicating that IP address allocation is rejected.

It can be learned that, as described in this embodiment, when the IAB-MT is not located in an area other than an unpermitted area in any potential access cell when being powered on, the IAB-MT is allowed to access a cell with best signal quality, but the IAB-DU is not activated, so that the IAB node can still normally use some functions in an unpermitted area.

### 2. The IAB node selects a cell to perform a handover process.

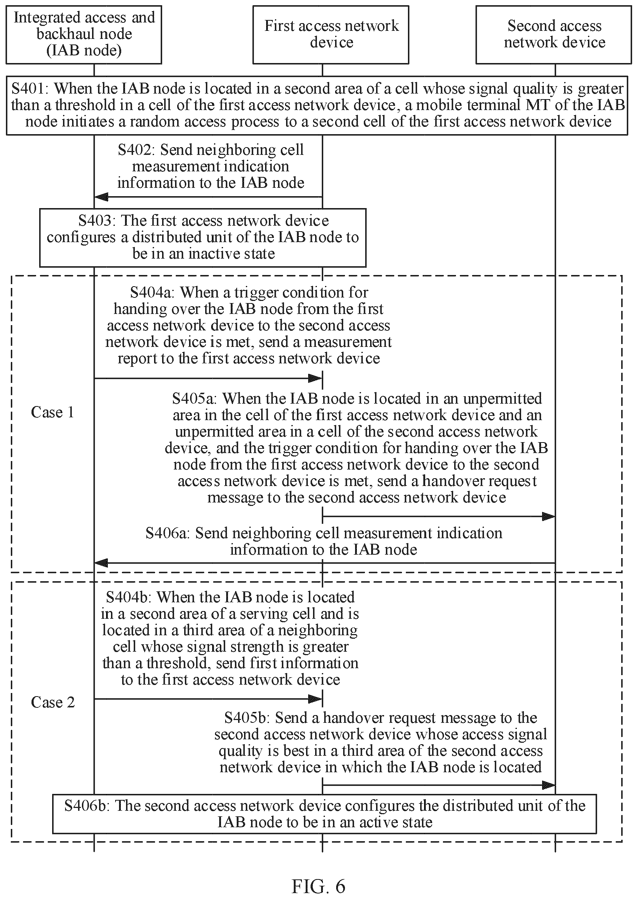

For example, FIG. 6 is a schematic flowchart of a fourth IAB node mobility management method according to this application. The method may be implemented through interaction between a first access network device, a second access network device, and an IAB node. It may be understood that, before the IAB node performs handover, access steps (that is, steps S401 to S403) are further included:
S401: When the IAB node is located in a second area of a cell whose signal quality is greater than a threshold in a cell of the first access network device, a mobile terminal MT of the IAB node initiates a random access process to a second cell of the first access network device.
S402: The first access network device sends neighboring cell measurement indication information to the IAB node.
S403: The first access network device configures a distributed unit of the IAB node to be in an inactive state.

For specific implementations of S401 to S403, refer to corresponding descriptions in the subsection 1 in the part III, the first section. Details are not described herein again.

When the IAB node performs handover, two different cases may be included:
Case 1: The IAB node does not move to a permitted area of any cell, but a handover event (for example, an A2 event, that is, signal quality of a serving cell is less than a threshold) occurs on the IAB-MT, and the IAB-MT performs handover, which includes the following steps:

S404a: When a trigger condition for handing over the IAB node from the first access network device to the second access network device is met, the IAB node sends a measurement report to the first access network device.

The trigger condition for handing over the IAB node from the first access network device to the second access network device includes a trigger event for triggering the IAB node to perform handover. For example, the trigger event may be an A1 event and an A2 event that are specified for a serving cell in an existing protocol. For example, when the A2 event (that is, the signal quality of the serving cell of the IAB node is less than the threshold) occurs on the IAB node, that is, when the trigger condition for handing over the IAB node from the first access network device to the second access network device is met, the IAB node performs measurement reporting, and reports location information of the IAB node (for example, sends the location information of the IAB node to the first access network device).

S405a: When the IAB node is located in an unpermitted area in the cell of the first access network device and an unpermitted area in a cell of the second access network device, and the trigger condition for handing over the IAB node from the first access network device to the second access network device is met, the first access network device sends a handover request message to the second access network device.

For example, after the first access network device receives the measurement report reported by the IAB node, the first access network device may perform handover determining, determine to hand over the IAB node to the second access network device, and send the handover request message to the second access network device. The handover request message is used to request to hand over the IAB node to the second access network device, and configure the distributed unit of the IAB node to be in an inactive state (that is, not to activate the IAB-DU). Optionally, indication information for configuring the distributed unit of the IAB node to be in an inactive state may include at least one of the foregoing six implementations. Indication information indicating to configure the distributed unit of the IAB node to be in an active state may be carried in the handover request message, or may be carried in another message. It may be understood that, although the IAB node is handed over from the first access network device to the second access network device, because the IAB node is neither located in a permitted area of a serving cell before the handover nor located in a permitted area of a target cell after the handover, after the IAB-MT is handed over, a current state of the IAB-DU is still maintained (the IAB-DU is not activated).

S406a: The second access network device sends neighboring cell measurement indication information to the IAB node.

The neighboring cell measurement indication information indicates the IAB node to perform neighboring cell measurement. For example, after the IAB node is handed over to the second access network device, because the IAB-DU is still in an inactive state, the second access network device may deliver a measurement configuration, so that the IAB-MT starts neighboring cell measurement. In a possible implementation, the second access network device sends unpermitted area information in the cell of the second access network device and unpermitted area information in a cell of a third access network device to the IAB node. The third access network device includes one or more access network devices adjacent to the second access network device, so that the IAB node can perform neighboring cell measurement.

Case 2: The IAB-MT determines, based on unpermitted area information of the serving cell and unpermitted area information of all neighboring cells, and location information of the IAB-MT, that the IAB node is located in an area other than an unpermitted area of a current cell or a neighboring cell whose signal strength is greater than the threshold, which includes the following steps:
S404b: When the IAB node is located in a second area of the serving cell and is located in a third area of the neighboring cell whose signal strength is greater than the threshold, the IAB node sends first information to the first access network device.

The second area is the unpermitted area of the serving cell, and the third area is an area other than the unpermitted area in the neighboring cell. For example, when performing neighboring cell measurement, the IAB node detects that signal strength of a neighboring cell is greater than a threshold, and determines, with reference to the location information of the IAB node and unpermitted area information of the neighboring cell, that the IAB node is located in an area other than an unpermitted area in the neighboring cell. In this case, the IAB node may send the first information to the first access network device, to indicate that the IAB node has detected that the IAB node is located in an area other than an unpermitted area in a cell, and expects to restore an IAB service. The first information includes one or more of the following information: location information of the IAB node, an identifier of a target cell selected by the IAB node to access, and indication information for requesting to activate the distributed unit of the IAB node. It may be understood that, when the first information includes the location information of the IAB node, it indicates that the first access network device determines, based on the location information of the IAB node, the target cell to be accessed by the IAB node. When the first information includes the identifier of the target cell selected by the IAB node to access, it indicates that the IAB-MT selects the to-be-accessed target cell. It should be noted that, generally, common UE cannot select a target cell, but the IAB-MT may be considered as a network device, and the IAB-MT may directly determine the target cell. When the first information includes the indication information for requesting to activate the distributed unit of the IAB node, the first information is applicable to a scenario in which an unpermitted area is unrelated to a cell. When the unpermitted area is unrelated to the cell, a base station does not need to determine, after the IAB node reports a location, a neighboring cell to be accessed to activate the DU. The IAB node may directly report indication information, to indicate that the IAB-DU needs to be activated.

S405b: The first access network device sends a handover request message to the second access network device whose access signal quality is best in a third area of the second access network device in which the IAB node is located.

The handover request message is used to request to hand over the IAB node to the second access network device. For example, if the IAB node is currently located in an area other than an unpermitted area in a cell of the second access network device, the IAB node may request to hand over the IAB node to a cell that is located in the area other than the unpermitted area and whose signal quality is best.

In a possible implementation, if the IAB node is currently located in an area other than an unpermitted area in a neighboring cell other than the serving cell of the first access network device, the first access network device directly hands over the IAB node from the current serving cell to the neighboring cell of the first access network device that meets a handover condition. In this case, an inter-cell handover in the first access network device is performed, and the handover request message does not need to be sent to the second access network device.

S406b: The second access network device configures the distributed unit of the IAB node to be in an active state. For a specific implementation, refer to corresponding descriptions in the subsection 1 in the part II, the first section. Details are not described herein again. When the IAB-DU is configured to be in an active state, the IAB node may provide an IAB service for a terminal device.

It can be learned that, in this embodiment, when the IAB-MT is not located in an area other than an unpermitted area in any potential access cell when being powered on, the IAB-MT is allowed to access a cell with best signal quality, but does not activate the IAB-DU until the IAB-MT detects that the IAB-MT is located in a permitted area of a current cell or a neighboring cell, and then activates the IAB-DU, thereby facilitating quick recovery of the IAB service after the IAB node moves out of the unpermitted area.

IV. Assuming that an IAB-MT is originally located in an area other than an unpermitted area in a serving cell, and then when the IAB-MT moves to the unpermitted area of the serving cell, an IAB node selects a neighboring cell to perform a handover process or a process of disabling an IAB-DU.

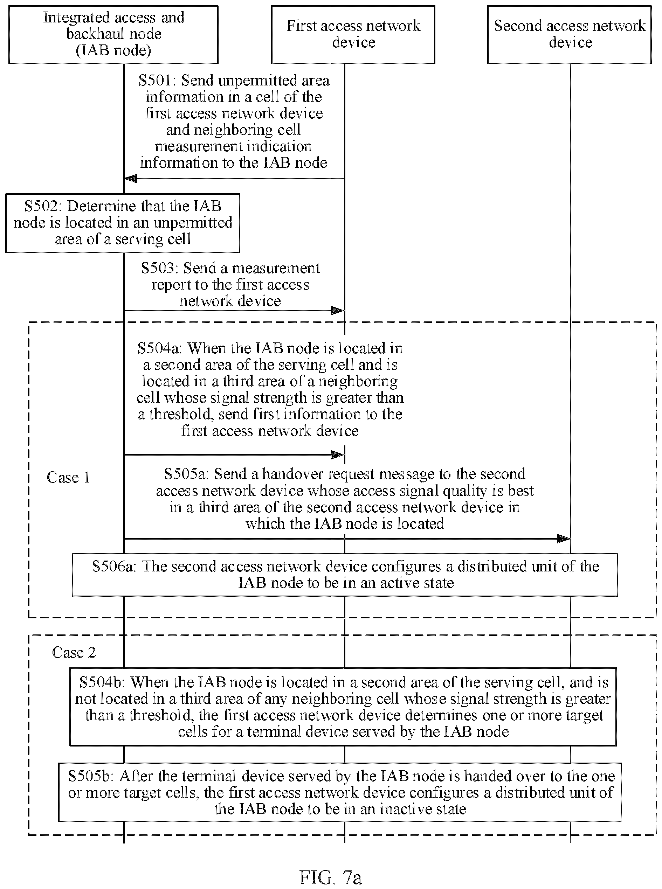

For example, FIG. 7a is a schematic flowchart of a fifth IAB node mobility management method according to this application. The method may be implemented through interaction between a first access network device, a second access network device, and an IAB node. It may be understood that, before the IAB node selects a neighboring cell to perform handover or disables the IAB-DU, neighboring cell measurement steps (that is, steps S501 to S503) are further included:

S501: The first access network device sends unpermitted area information in a cell of the first access network device and neighboring cell measurement indication information to the IAB node.

For example, the first access network device sends an RRC message to the IAB node, where the RRC message includes unpermitted area information of a serving cell and unpermitted area information of all neighboring cells of an IAB-MT, and delivers a measurement configuration, so that the IAB-MT starts neighboring cell measurement.

S502: The IAB node determines, based on location information of the IAB node, that the IAB node is located in an unpermitted area of the serving cell.

S503: The IAB node sends a measurement report to the first access network device. For example, the IAB-MT performs measurement reporting, and adds the location information of the IAB-MT to the measurement report. Alternatively, the IAB node separately sends a message to notify a DgNB of the location information of the IAB node, indicating that it is detected that the IAB node is located in the unpermitted area of the serving cell, and expects the DgNB to hand over the IAB node to another cell or disable the IAB-DU based on an actual situation.

That the first access network device performs handover determining based on the measurement report and the location information of the IAB node includes the following two cases:
Case 1: The IAB node selects a neighboring cell for handover.

S504a: When the IAB node is located in a second area of the serving cell and is located in a third area of the neighboring cell whose signal strength is greater than a threshold, the IAB node sends first information to the first access network device.

The third area is an area other than an unpermitted area in the neighboring cell. That is, when the IAB node moves from a permitted area to the unpermitted area in the serving cell, and is located in a permitted area of the neighboring cell, the IAB node may send the first information to the first access network device, to notify the first access network device to hand over the IAB node to the neighboring cell. The first information includes one or more of the following information: location information of the IAB node, an identifier of a target cell selected by the IAB node to access, and indication information for requesting to activate a distributed unit of the IAB node. For specific descriptions of the first information, refer to the descriptions of the first information in the subsection 2 in the part III. Details are not described herein again.

S505a: The first access network device sends a handover request message to the second access network device whose access signal quality is best in a third area of the second access network device in which the IAB node is located.

The handover request message is used to request to hand over the IAB node to the second access network device. That is, when the IAB node moves from the permitted area to the unpermitted area in the serving cell, and is located in the permitted area of the neighboring cell, the first access network device may request to hand over the IAB node to the second access network device in which the neighboring cell is located, so that the IAB node can select, when the unpermitted area exists, the serving cell located in the permitted area to provide an IAB service normally.

S506a: The second access network device configures the distributed unit of the IAB node to be in an active state. For a specific implementation, refer to corresponding descriptions in the subsection 1 in the part II, the first section. Details are not described herein again. When the IAB-DU is configured to be in an active state, the IAB node may provide an IAB service for a terminal device.

It can be leamed that, as described in this embodiment, when the IAB node is originally located in an area other than the unpermitted area in the serving cell, and provides an IAB service for the terminal device, and then moves to the unpermitted area, the DgNB determines whether the IAB node is located in an area other than an unpermitted area in another neighboring cell, and if yes, hands over the IAB node to the neighboring cell, so as to implement correct working of a constraint condition of an unpermitted area less than a cell granularity and related to the cell, and facilitate quick recovery of communication after the IAB node moves out of the unpermitted area.

Case 2: Disable the IAB-DU.

S504b: When the IAB node is located in a second area of the serving cell, and is not located in a third area of any neighboring cell whose signal strength is greater than a threshold, the first access network device determines one or more target cells for a terminal device served by the IAB node.

The third area is an area other than an unpermitted area in the neighboring cell. That is, when the IAB node moves from a permitted area to the unpermitted area in the serving cell, and is located in unpermitted areas of all neighboring cells, if the IAB node still cannot normally use an IAB service after being handed over to any neighboring cell, the IAB-DU may be disabled. For example, that the first access network device determines one or more target cells for a terminal device served by the IAB node specifically includes the following steps:
s21: The first access network device delivers a neighboring cell measurement configuration to one or more terminal devices served by the IAB, so that the one or more terminal devices perform measurement reporting.
s22: The first access network device performs handover determining for the one or more terminal devices, and selects one or more target cells respectively corresponding to the one or more terminal devices. The target cell is a cell with best signal quality other than the current serving cell in the cell of the first access network device, or a cell with best signal quality in the cell of the second access network device. For example, if the first access network device learns, based on location information of the terminal device and the measurement report, that a cell of the second access network device is a target cell of the terminal device, the first access network device determines to hand over the terminal device to the second access network device.
s23: The first access network device interacts with the second access network device to prepare for handover.
s24: The first access network device hands over the one or more terminal devices to their respective target cells.
s25: After all the terminal devices are handed over, the second access network device sends a handover complete message to the first access network device. For example, the second access network device sends a UE CONTEXT RELEASE message to the first access network device.

S505b: After the terminal device served by the IAB node is handed over to the one or more target cells, the first access network device configures the distributed unit of the IAB node to be in an inactive state.

In other words, after the one or more terminal devices served by the IAB node are handed over to their respective target cells, the first access network device disables the IAB-DU.

For example, that the first access network device configures the distributed unit of the IAB node to be in an inactive state specifically includes the following steps:
s31: After receiving the handover complete message, the first access network device determines that the one or more terminal devices served by the IAB have been handed over.
s32: The first access network device disables the IAB-DU. For example, a specific implementation may include but is not limited to: deleting a TNL address of the IAB node, or setting all cells of the IAB-DU to cellBarred, or deleting an F1 interface of the IAB-DU, or deleting all RLC CHs of the IAB-MT.

It should be noted that, after step S505b, a current state is that the IAB node is not located in the area other than the unpermitted area in the serving cell and that in any neighboring cell, and the IAB-DU is disabled. This scenario is the same as the scenario described in the part III. Therefore, after step S505b, the steps described in the part III may continue to be performed. Details are not described herein again.

It can be leamed that, as described in this embodiment, when the IAB node is originally located in an area other than the unpermitted area in the serving cell, and provides an IAB service for the terminal device, and then moves to the unpermitted area, the DgNB determines whether the IAB node is located in an area other than an unpermitted area in another neighboring cell, and if no, disables the IAB-DU, so as to implement correct working of a constraint condition of an unpermitted area less than a cell granularity and related to the cell, and facilitate quick recovery of communication after the IAB node moves out of the unpermitted area.

V. It is assumed that an IAB-node is not allowed to provide an IAB service during initial power-on.

That an IAB node is not allowed to provide an IAB service may include a time limitation, a space limitation, or a limitation in another manner. For example, a geographical location or a time at which the IAB service is allowed to be provided is preconfigured on the IAB node. The geographical location at which the IAB service is allowed to be provided may be located in the permitted area of the access network device described in the foregoing embodiments. This is not limited in embodiments.

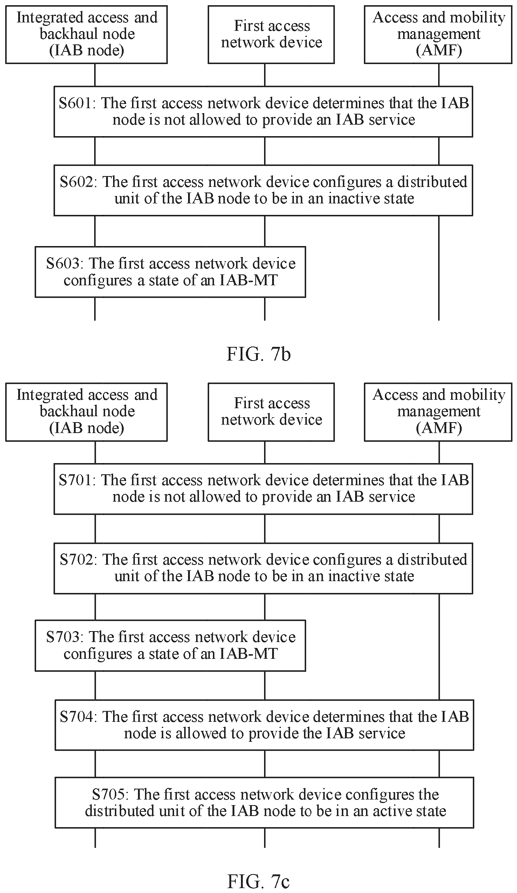

For example, FIG. 7b is a schematic flowchart of a sixth IAB node mobility management method according to this application. The method may be implemented through interaction between a first access network device, an IAB node, and an AMF.

S601: The first access network device determines that the IAB node is not allowed to provide an IAB service.

Specifically, S601 includes but is not limited to the following implementations:

Implementation 1: The AMF notifies the first access network device that the IAB node is not allowed to provide the IAB service.

For example, S601 includes the following procedure:
S601-1: When the IAB node sets up an RRC connection to the first access network device, the IAB node sends a registration request message to the AMF. For example, the registration request message is located in a non-access stratum NAS message, and a manner of sending the NAS message is as follows: The IAB node adds the NAS message to an RRC message, and sends the RRC message to a DgNB. Then, the DgNB adds the NAS message to an MT initial context setup request message (INITIAL UE MESSAGE), and sends the MT initial context setup request message to the AMF through an NG interface. The DgNB only forwards the NAS message, but does not parse the NAS message.
S601-2: The AMF determines that the IAB node is not allowed to provide an IAB service. For example, the AMF determines, based on a current location (for example, an unpermitted area) of the IAB node and/or time information and with reference to a geographical location (for example, a permitted area) or a time at which the IAB node is allowed to provide the IAB service, that the IAB node is not allowed to provide the IAB service.
S601-3: The AMF sends first indication information to the first access network device, where the first indication information indicates that the IAB node is not allowed to provide the IAB service.

For example, the AMF sends an MT context setup request message (INITIAL CONTEXT SETUP REQUEST) to the DgNB. The message includes the first indication information. An IAB authorized field in the message indicates whether an IAB-MT is authorized. For example, the IAB authorized field is set to false/not authorized based on a determining result in S601-2. Optionally, the message may further carry NAS information indicating that MT registration is accepted. Optionally, the NAS information may carry an indication information element "not IAB", where the indication information element indicates that the IAB-MT is not allowed to provide the IAB service although the MT registration is accepted. It should be noted that the indication information element is optional (the indication information element may not need to be notified to the MT in the NAS message). In a subsequent step, the DgNB may directly indicate the MT not to activate a DU. Further, the DgNB transparently transmits the NAS information by using an RRC message (that is, the DgNB only forwards the NAS message, but does not parse the NAS message). Optionally, the IAB authorized field in the MT context setup request message may be set to true/authorized, to indicate that the MT is authorized. However, in this case, the message carries an additional information element to indicate not to activate the DU.

S601-4: The first access network device determines, based on the first indication information, that the IAB node is not allowed to provide the IAB service.

Implementation 2: The IAB node determines, based on implementation determining, that the IAB service is not allowed to be provided.

For example, S601 includes the following procedure:
S601-1: The IAB node determines that the IAB service is not allowed to be provided.

For example, a specified location area and/or a specified time at which the IAB service is allowed to be provided are/is preconfigured on the IAB node. If a current location area of the IAB node or a current time does not meet the specified location area and/or the specified time at which the IAB service is allowed to be provided, the IAB node determines that the IAB service is not allowed to be provided.

S601-2: The IAB node sends an RRC message to the first access network device, where the RRC message indicates that the IAB node is not allowed to provide the IAB service.

For example, the IAB node sends an RRC message (for example, a msg5 message) to the DgNB, to indicate that the IAB node cannot serve as the IAB node.

S601-3: The first access network device determines, based on the RRC message, that the IAB node is not allowed to provide the IAB service.

Implementation 3: The first access network device determines that the IAB node is not allowed to provide the IAB service.

For example, S601 includes the following procedure:
S601-1: An OAM sends second indication information to the first access network device, where the second indication information indicates that the IAB node is not allowed to provide the IAB service in a specified location area and/or at a specified time.

For example, the OAM may send the second indication information to a DgNB in advance, where the second indication information may indicate that the IAB node is not allowed to provide the IAB service in a cell of the DgNB and/or at a specified time. The cell of the DgNB includes, for example, an unpermitted area and a permitted area.

S601-2: The first access network device determines, based on the second indication information, that the IAB node is not allowed to provide the IAB service.

For example, the DgNB determines, based on the second indication information and a current location of the IAB node, that the IAB node is not allowed to provide the IAB service.

S602: The first access network device configures a distributed unit of the IAB node to be in an inactive state.

For a specific implementation in which the first access network device configures the distributed unit of the IAB node to be in an inactive state, refer to corresponding descriptions in the foregoing embodiment. For example, the IAB-DU does not set up an F1 interface with the first access network device, or does not allocate an IP address. Details are not described herein again.

S603: The first access network device configures a state of an IAB-MT.

Specifically, S603 includes the following two implementations:
Implementation 1: The MT is not allowed to be released to an idle/deactivated (IDLE/INACTIVE) state.

For example, S603 includes the following procedure:

When the distributed unit of the IAB node is in an inactive state, the first access network device configures the IAB-MT to be in a connected state.

For the IAB node that works normally, in an existing standard protocol, the MT is always in a connected (CONNECTED) state, and is not released to an IDLE state or an INACTIVE state. Therefore, in a scenario in which only the MT does not activate the DU that is newly introduced in this application, the MT also needs to be retained in a CONNECTED state, and the DgNB does not release the MT to an IDLE state or an INACTIVE state. That is, when the distributed unit of the IAB node is in an inactive state, the first access network device configures the IAB-MT to be in a connected state.

Implementation 2: The MT is allowed to be released to an IDLE/INACTIVE state.

For example, S603 includes the following procedure:
The first access network device sends an RRC release message to the IAB node, where the RRC release message is used to release the IAB-MT to an IDLE/INACTIVE state.

For example, the DgNB sends an RRCRelease message to the IAB-MT, to release the MT to an IDLE state or an INACTIVE state. Specifically, whether to release an IDLE state or an INACTIVE state depends on content in the RRCRelease message. Specifically, the DgNB may naturally send the RRCRelease message to the IAB node according to an existing protocol (for example, because the IAB-MT does not generate a service for a long time, the DgNB sends the RRCRelease message to the IAB node). Optionally, if the DgNB learns, in step S601, that the IAB node cannot provide the IAB service, the DgNB may directly send an RRCRelease message to the IAB node, to release the IAB-MT to an IDLE state or an INACTIVE state.

Optionally, the RRCRelease message may further indicate the MT to periodically restore to a CONNECTED state, so that a network can identify a location of the MT at a later time (the network can sense a serving cell of the MT only when the MT is in a connected state), to determine whether to activate the DU. Optionally, the RRCRelease message may not indicate the MT to periodically restore to a CONNECTED state. In a case of no indication, the AMF or the DgNB may periodically initiate paging (Paging) to the MT, to wake up the MT to enter a connected state. For example, for the MT in an IDLE state, the MT may be woken up to enter a connected state through paging of a core network; or for the MT in an INACTIVE state, the MT may be woken up to enter a connected state through paging of an access network.

It can be learned that, in the method provided in this embodiment, when the IAB node is not allowed to provide the IAB service, the IAB-MT is allowed to continue to connect to the network but does not start the DU, so as to facilitate quick recovery of communication after the IAB node moves out of the unpermitted area.

In an example, in a procedure in which the IAB-node is not allowed to provide the IAB service during initial power-on, the IAB service may be allowed to be provided in a subsequent phase. In this case, based on the embodiment in FIG. 7b, a subsequent processing procedure may be further extended. For example, FIG. 7c is a schematic flowchart of a seventh IAB node mobility management method according to this application. The method may be implemented through interaction between a first access network device, an IAB node, and an AMF.

S701: The first access network device determines that the IAB node is not allowed to provide an IAB service.

S702: The first access network device configures a distributed unit of the IAB node to be in an inactive state.

S703: The first access network device configures a state of an IAB-MT.

For specific implementations of S701 to S703, refer to corresponding descriptions in S601 to S603. Details are not described herein again.

S704: The first access network device determines that the IAB node is allowed to provide the IAB service.

Specifically, S704 includes but is not limited to the following implementations:
Implementation 1: The AMF notifies the first access network device that the IAB node is allowed to provide the IAB service.

For example, S704 includes the following procedure:
S704-1: The AMF determines that the IAB node is allowed to provide the IAB service. For example, in a period of time after S701 is performed, the AMF determines, based on a current location (for example, UE moves to an unpermitted area) of the IAB node and/or time information and with reference to a geographical location (for example, a permitted area) or a time at which the IAB node is allowed to provide the IAB service, that the IAB node is allowed to provide the IAB service.
S704-2: The AMF sends third indication information to the first access network device, where the third indication information indicates that the IAB node is allowed to provide the IAB service.

For example, the AMF sends an MT context update request message (UE CONTEXT MODIFICATION REQUEST) to the DgNB. If an IAB authorized field in the update message is set to false/not authorized in S701, but after S704-1, the IAB authorized field in the update message may be set to true/authorized. Optionally, if an indication "not IAB" has been sent to the MT by using a NAS PDU in S701, the update message carries, in a NAS registration update manner, indication information indicating the IAB node. Further, if the NAS registration update message carries the indication information indicating the IAB node, the NAS registration update message is sent to the IAB-MT in an RRC message. If the IAB authorized field in the MT context update request message is set to true/authorized in S701, indicating that the MT is authorized, but an information element is carried to indicate not to activate the DU, in the update message in S704-2, the IAB authorized field remains true/authorized, and an information element is carried to indicate to activate the DU.

S704-3: The first access network device determines, based on the third indication information, that the IAB node is allowed to provide the IAB service.

Implementation 2: The IAB node determines, based on implementation determining, that the IAB service is allowed to be provided.

For example, S704 includes the following procedure:
S704-1: The IAB node determines that the IAB service is allowed to be provided.

For example, a specified location area and/or a specified time at which the IAB service is allowed to be provided are/is preconfigured on the IAB node. If a current location area of the IAB node or a current time meets the specified location area and/or the specified time at which the IAB service is allowed to be provided, the IAB node determines that the IAB service is allowed to be provided.

S704-2: The IAB node sends an RRC message to the first access network device, where the RRC message indicates that the IAB node is allowed to provide the IAB service.

For example, the IAB node sends an RRC message to the DgNB, to indicate that the IAB node can serve as the IAB node; or the RRC message is used to request an IP address (for example, an IP address is requested by using an RRC message of IABOtherInformation). Optionally, when the IAB node is allowed to provide the IAB service, the DU directly initiates an F1 SETUP REQUEST message to the DgNB, to request to set up an F1 interface; or the DU directly initiates a TNL association setup request to the DgNB.

S704-3: The first access network device determines, based on the RRC message, that the IAB node is allowed to provide the IAB service.

Implementation 3: The first access network device determines that the IAB node is allowed to provide the IAB service.

For example, S704 includes the following procedure:
S704-1: An OAM sends second indication information to the first access network device, where the second indication information indicates that the IAB node is not allowed to provide the IAB service in a specified location area and/or at a specified time.

For example, the OAM may send the second indication information to a DgNB in advance, where the second indication information may indicate that the IAB node is not allowed to provide the IAB service in a cell of the DgNB and/or at a specified time. The cell of the DgNB includes, for example, an unpermitted area and a permitted area.

S704-2: The first access network device determines, based on the second indication information, that the IAB node is allowed to provide the IAB service.

For example, the DgNB determines, based on the second indication information and a current location of the IAB node, that the IAB node is allowed to provide the IAB service.

S705: The first access network device configures the distributed unit of the IAB node to be in an active state.

In this example, according to the description in S702, the IAB-DU is not activated when the IAB initially accesses the network. When determining to activate the IAB-DU, an IAB-donor needs to send a message to trigger DU activation. In this case, that the first access network device configures the distributed unit of the IAB node to be in an active state includes at least one step:
Step 1: The IAB-MT sets up a default radio link control channel (default radio link control channel, default RLC CH). For example, the IAB-MT receives indication information, which indicates the IAB-MT to set up the default RLC CH. Correspondingly, the first access network device configures the default RLC CH.
Step 2: Allocate a BAP address and a default BAP routing identifier (default BAP routing ID). For example, the DgNB sends an RRC message to the IAB-MT, where the message is used to allocate the BAP address and the default BAP routing ID to the IAB-MT.
Step 3: Allocate an IP address. For example, the DgNB sends an RRC message to the IAB-MT, where the RRC message is used to allocate the IP address to the IAB-MT.
Step 4: The first access network device configures a TNL association for the IAB-DU. For example, when sending a data packet to a donor CU, the IAB-DU may insert a source TNL (source TNL) address of the IAB-DU and a target TNL (target TNL) address of the donor CU into a packet header, that is, a TNL association indicates that the IAB node may set up a connection relationship with the donor CU at a TNL layer. In a possible implementation, the first access network device allocates a source transport network layer address (source TNL address) to the IAB-DU. In a possible implementation, the DgNB sends an RRC message to the IAB-MT, where the RRC message indicates that the DU part of the IAB-node can initiate setup of the TNL association. In a possible implementation, the IAB-DU directly initiates a TNL association setup request message. Correspondingly, the DgNB receives the TNL association setup request message, and returns a response message to the IAB-DU, to complete TNL association setup.
Step 5: The IAB-DU sets up an F1 interface with the first access network device. For example, the IAB-DU initiates, to the first access network device, an operation of setting up the F1 interface. Correspondingly, the first access network device configures the F1 interface. In a possible implementation, the DgNB sends a radio resource control (radio resource control, RRC) message to the IAB-MT, where the RRC message indicates that the DU part of the IAB-node can initiate an F1 interface setup request message (F1 SETUP REQUEST). In another possible implementation, the IAB-DU directly initiates an F1 SETUP REQUEST. Correspondingly, the DgNB receives the F1 SETUP REQUEST, and returns an F1 interface setup response message (F1 SETUP RESPONSE) to the IAB-DU, to complete F1 interface setup.
Step 6: The first access network device configures all cells of the IAB-DU to allow access of a terminal device. For example, the DgNB sets the cells of the IAB-DU to notBarred, to allow to provide a service for common UE; and sets a cell iab-support to present (true), to allow to provide a service for another IAB-MT.

The six manners in which the first access network device configures the distributed unit of the IAB node to be in an inactive state in the foregoing embodiment may correspond to different methods for configuring the distributed unit of the IAB node to be in an active state. The method includes at least one of step 1 to step 6. Specifically, if the IAB service is not allowed to be provided in Manner 1 of configuring the DU to be in an inactive state, a corresponding method for configuring the distributed unit of the IAB node to be in an active state includes step 1 to step 6. If the IAB service is not allowed to be provided in Manner 5 of configuring the DU to be in an inactive state, a corresponding method for configuring the distributed unit of the IAB node to be in an active state includes step 2 to step 6 and/or does not include step 1. If the IAB service is not allowed to be provided in Manner 6 of configuring the DU to be in an inactive state, a corresponding method for configuring the distributed unit of the IAB node to be in an active state includes step 3 to step 6 and/or does not include step 1 and step 2. If the IAB service is not allowed to be provided in Manner 4 of configuring the DU to be in an inactive state, a corresponding method for configuring the distributed unit of the IAB node to be in an active state includes step 4 to step 6 and/or does not include step 1 to step 3. If the IAB service is not allowed to be provided in Manner 2 of configuring the DU to be in an inactive state, a corresponding method for configuring the distributed unit of the IAB node to be in an active state includes step 5 and step 6 and/or does not include step 1 to step 4. If the IAB service is not allowed to be provided in Manner 3 of configuring the DU to be in an inactive state, a corresponding method for configuring the distributed unit of the IAB node to be in an active state includes step 6 and/or does not include step 1 to step 5.

In this example, when the IAB node is not allowed to provide the IAB service, the IAB-MT is allowed to continue to connect to the network but does not start the DU. In addition, when the IAB node is allowed to provide the IAB service, the DU may be quickly started. This facilitates quick recovery of communication after the IAB node moves out of the unpermitted area.

VI. It is assumed that an IAB-node is allowed to provide an IAB service during initial power-on, and is not allowed to provide the IAB service in a subsequent phase.

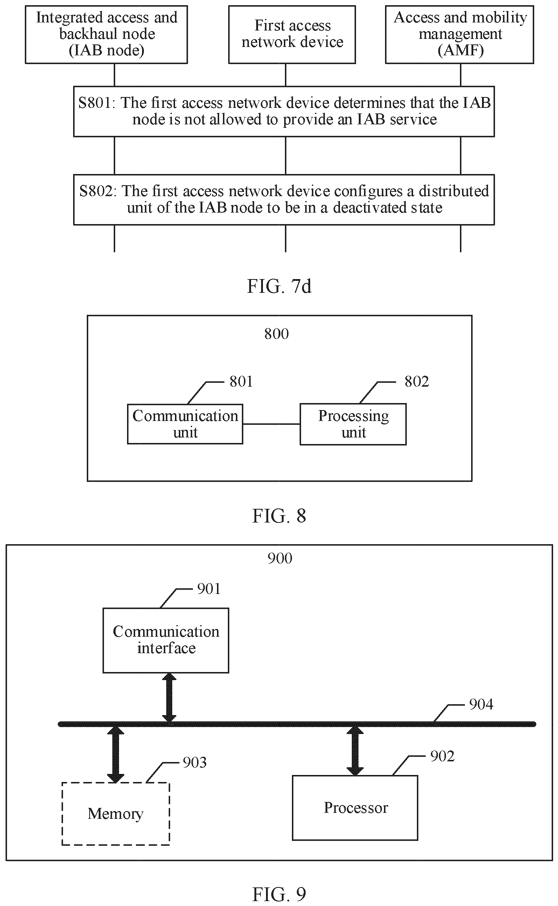

For example, FIG. 7d is a schematic flowchart of an eighth IAB node mobility management method according to this application. The method may be implemented through interaction between a first access network device, an IAB node, and an AMF.

S801: The first access network device determines that the IAB node is not allowed to provide an IAB service.

Optionally, before S801, the method further includes the following step: When an MT initially accesses a network, the first access network device determines that the IAB node is allowed to provide the IAB service.

For example, when the IAB node sets up an RRC connection to the first access network device, the IAB node sends a registration request message to the AMF. For example, the registration request message is included in a NAS message. Correspondingly, the AMF may feed back a registration response message to the IAB node, where the registration response message may be included in the NAS message. Optionally, the NAS message carrying the registration response message further includes indication information indicating that the IAB node is allowed to provide the IAB service. For example, the NAS message may be carried in an INITIAL CONTEXT SETUP REQUEST message, sent by the AMF to a DgNB, carried in an RRC message, and sent by the DgNB to the MT.

Specifically, S801 includes but is not limited to the following implementations:
Implementation 1: The AMF notifies the first access network device that the IAB node is not allowed to provide the IAB service.

For example, S801 includes the following procedure:
S801-1: The AMF determines that the IAB node is not allowed to provide the IAB service. For example, the AMF determines, based on a current location (for example, an unpermitted area) of the IAB node and/or time information and with reference to a geographical location (for example, a permitted area) or a time at which the IAB node is allowed to provide the IAB service, that the IAB node is not allowed to provide the IAB service.

Optionally, the AMF may send a first message to the first access network device, where the first message indicates the first access network device to hand over UE served by the IAB node to a first cell. The first cell includes a cell other than a cell served by the IAB node. The first message includes an AMF UE NGAP ID and/or a RAN UE NGAP ID of the IAB-MT. The two IDs indicate the DgNB, and the UE that needs to be handed over is served by the IAB node associated with the MT.

S801-2: The AMF sends first indication information to the first access network device, where the first indication information indicates that the IAB node is not allowed to provide the IAB service.

For example, the AMF sends an MT context update request message (UE CONTEXT MODIFICATION REQUEST) to the DgNB, where an IAB authorized field in the MT context update request message is set to false/not authorized based on a determining result in S801-1. Optionally, the message may further carry NAS information for updating MT registration information. The NAS information carries an indication information element "not IAB", and the indication information element is used to notify, in a registration information update manner, the MT that the IAB service is not allowed to be provided. It should be noted that the indication information element is optional (the indication information element may not need to be notified to the MT in the NAS message). In a subsequent step, the DgNB directly indicates the MT to deactivate a DU. The DgNB transparently transmits the NAS information by using an RRC message. Optionally, the IAB authorized field in the MT context update request message may be set to true/authorized, to indicate that an authorization result of the MT is not changed. However, in this case, the message carries an additional information element to indicate not to activate the DU.

S801-3: The first access network device determines, based on the first indication information, that the IAB node is not allowed to provide the IAB service.

Implementation 2: The IAB node determines, based on implementation determining, that the IAB service is not allowed to be provided.

For example, S801 includes the following procedure:
S801-1: The IAB node determines that the IAB service is not allowed to be provided.

For example, a specified location area and/or a specified time at which the IAB service is allowed to be provided are/is preconfigured on the IAB node. If a current location area of the IAB node or a current time does not meet the specified location area and/or the specified time at which the IAB service is allowed to be provided, the IAB node determines that the IAB service is not allowed to be provided.

S801-2: The IAB node sends an RRC message to the first access network device, where the RRC message indicates that the IAB node is not allowed to provide the IAB service.

For example, the IAB node sends an RRC message to the DgNB, to indicate that the IAB node cannot serve as the IAB node.

S801-3: The first access network device determines, based on the RRC message, that the IAB node is not allowed to provide the IAB service.

Implementation 3: The first access network device determines that the IAB node is not allowed to provide the IAB service.
For example, S801 includes the following procedure:

S801-1: An OAM sends second indication information to the first access network device, where the second indication information indicates that the IAB node is not allowed to provide the IAB service in a specified location area and/or at a specified time.

For example, the OAM may send the second indication information to a DgNB in advance, where the second indication information may indicate that the IAB node is not allowed to provide the IAB service in a cell of the DgNB and/or at a specified time. The cell of the DgNB includes, for example, an unpermitted area and a permitted area.

S801-2: The first access network device determines, based on the second indication information, that the IAB node is not allowed to provide the IAB service.

For example, the DgNB determines, based on the second indication information and a current location of the IAB node, that the IAB node is not allowed to provide the IAB service.

S802: The first access network device configures the distributed unit of the IAB node to be in a deactivated state.

In this embodiment, configuring the DU to be in a deactivated state and configuring the DU to be in an inactive state may indicate different meanings. For example, configuring the DU to be in a deactivated state indicates that the DU is configured to be in an active state in an initial state, and the IAB node is not allowed to provide an IAB service in a subsequent process, and in this case, the DU is deactivated. Configuring the DU to be in an inactive state indicates that the IAB node is not allowed to provide an IAB service in an initial state, and in this case, the DU is directly configured to be in an inactive state.

Specifically, that the first access network device configures the distributed unit of the IAB node to be in a deactivated state may include at least one of the following manners:
Manner 1: The DgNB indicates the IAB-MT to delete a BH RLC CH. For example, the DgNB sends an RRC message to the IAB-MT, where the RRC message indicates the IAB-MT to delete all BH RLC CHs. Optionally, the DgNB deletes BAP configurations and BH RLC CH configurations associated with the IAB node on all parent nodes between the IAB-MT and the DgNB.
Manner 2: The DgNB indicates the IAB-MT to delete a BAP address and/or a default BAP routing ID. For example, the DgNB sends an RRC message to the IAB-MT, where the RRC message indicates the IAB-MT to delete the BAP address and/or the default BAP routing ID.
Manner 3: The DgNB indicates the IAB-MT to delete an IP address. For example, the DgNB sends an RRC message to the IAB-MT, where the RRC message indicates the IAB-MT to delete the IP address.
Manner 4: The DgNB deletes a TNL association. For a specific implementation, refer to descriptions in a protocol standard. This is not limited in this application.
Manner 5: The DgNB indicates the IAB-DU to delete an F1 interface. For example, a DgNB-CU sends an F1 interface deletion request message (F1 REMOVAL REQUEST) to the IAB-DU, to request the IAB-DU to delete the F1 interface.
Manner 6: The first access network device configures all cells of the IAB-DU to bar access of a terminal device. For example, the DgNB sets the cells of the IAB-DU to cellBarred, to reject providing a service for common UE; and sets a cell iab-support to absent (false), to reject providing a service for another IAB-MT.

To implement the functions in the method provided in this application, the apparatus or the device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, and is merely logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 8 is a diagram of a communication apparatus 800 according to this application. The apparatus may include a one-to-one corresponding module for performing the methods/operations/steps/actions described in the method embodiments corresponding to FIG. 3 to FIG. 7d. The module may be a hardware circuit, or may be software, or may be implemented by a hardware circuit in combination with software.

For example, the apparatus includes a communication unit 801 and a processing unit 802, configured to implement the method performed by the first access network device in the foregoing embodiment. The communication unit 801 is configured to send unpermitted area information in a cell of the first access network device to an IAB node. The processing unit 802 is configured to respond to a random access process initiated by the IAB node to a first cell of the first access network device. The first cell is a cell in which the IAB node is located and whose signal quality is best in a cell of a first area of the IAB node. The first area is an area other than an unpermitted area in the cell of the first access network device. For a specific execution procedure of the communication unit 801 and the processing unit 802 in this example, refer to the detailed descriptions of the IAB node mobility management method in the foregoing embodiment. Details are not described herein again. In the IAB node mobility management method implemented by the apparatus, unpermitted area information in a current cell may be directly indicated to the IAB node, so that when being powered on, the IAB-MT can directly select a cell with best signal quality for access, where the IAB-MT is located in a first area of the cell, thereby helping the IAB node to select a serving cell located in a permitted area to work normally under a condition that an unpermitted area constraint exists.

For example, the apparatus includes a communication unit 801 and a processing unit 802, configured to implement the method performed by the first access network device in the foregoing embodiment. The communication unit 801 is configured to receive location information of an IAB node; and when the location information indicates that the IAB node is located in an unpermitted area in a serving cell, send neighboring cell measurement indication information to the IAB node, where the neighboring cell measurement indication information indicates the IAB node to perform a neighboring cell measurement operation on one or more neighboring cells. The processing unit 802 is configured to: when a neighboring cell measurement result is that signal quality of a first neighboring cell is greater than a threshold and the IAB node is located in a first area of the first neighboring cell, hand over the IAB node to the first neighboring cell, where the first area is an area other than an unpermitted area in a cell of a first access network device. For a specific execution procedure of the communication unit 801 and the processing unit 802 in this example, refer to the detailed descriptions of the IAB node mobility management method in the foregoing embodiment. Details are not described herein again. In the IAB node mobility management method implemented by the apparatus, if unpermitted area information of a current cell is not directly indicated to the IAB node, the IAB node directly selects a cell with a best access signal, and reports location information to the first access network device after the access, and then the first access network device determines whether to hand over an IAB-MT to a cell that is located in a first area of the cell and whose signal quality is best.

For example, the apparatus includes a communication unit 801 and a processing unit 802, configured to implement the method performed by the first access network device in the foregoing embodiment. The processing unit 802 is configured to: when an IAB node is located in a second area of a cell whose signal quality is greater than a threshold in a cell of the first access network device, respond to a random access process initiated by a mobile terminal MT of the IAB node to a second cell of the first access network device, where the second cell is a cell in which the IAB node is located and whose signal quality is best in a cell of a second area of the IAB node; and the second area is an unpermitted area in the cell of the first access network device. The communication unit 801 is configured to send neighboring cell measurement indication information to the IAB node, where the neighboring cell measurement indication information indicates the IAB node to perform a neighboring cell measurement operation on one or more neighboring cells. For a specific execution procedure of the communication unit 801 and the processing unit 802 in this example, refer to the detailed descriptions of the IAB node mobility management method in the foregoing embodiment. Details are not described herein again. In the IAB node mobility management method implemented by the apparatus, if the IAB node is not located in a first area of any cell whose signal strength is greater than a threshold (that is, an area other than an unpermitted area in the cell) when the IAB node is powered on, the IAB-MT accesses a cell with best signal quality, but does not activate an IAB-DU.

For example, the apparatus includes a communication unit 801 and a processing unit 802, configured to implement the method performed by the IAB node in the foregoing embodiment. The communication unit 801 is configured to receive unpermitted area information in one or more cells. The processing unit 802 is configured to initiate a random access process to a first cell, where the first cell is a cell in which the IAB node is located and whose signal quality is best in a cell of a first area of the IAB node, and the first area is an area other than an unpermitted area in the one or more cells. For a specific execution procedure of the communication unit 801 and the processing unit 802 in this example, refer to the detailed descriptions of the IAB node mobility management method in the foregoing embodiment. Details are not described herein again. In the IAB node mobility management method implemented by the apparatus, the unpermitted area information in the one or more cells (the one or more cells herein may belong to a same access network device, or may belong to different access network devices) may be received, so that when the IAB-MT is powered on, the IAB-MT can directly select a cell with best signal quality for access, where the IAB-MT is located in a first area of the cell, thereby helping the IAB node to select a serving cell located in a permitted area to work normally under a condition that an unpermitted area constraint exists.

For example, the apparatus includes a communication unit 801 and a processing unit 802, configured to implement the method performed by the IAB node in the foregoing embodiment. The communication unit 801 is configured to send location information of the IAB node to a first access network device in which a serving cell is located; and when the location information indicates that the IAB node is located in an unpermitted area in the serving cell, receive neighboring cell measurement indication information, where the neighboring cell measurement indication information indicates the IAB node to perform a neighboring cell measurement operation on one or more neighboring cells. The processing unit 802 is configured to: when a neighboring cell measurement result is that signal quality of a first neighboring cell is greater than a threshold and the IAB node is located in a first area of the first neighboring cell, perform handover to the first neighboring cell based on a first handover instruction of the first access network device, where the first area is an area other than an unpermitted area in a cell of the first access network device or a second access network device, and the second access network device includes one or more access network devices adjacent to the first access network device. For a specific execution procedure of the communication unit 801 and the processing unit 802 in this example, refer to the detailed descriptions of the IAB node mobility management method in the foregoing embodiment. Details are not described herein again. In the IAB node mobility management method implemented by the apparatus, the IAB node can directly select a cell with a best access signal, and report location information to the first access network device after the access. If the IAB node is located in a first area of one or more cells, an IAB-MT may be handed over to a cell in which the IAB-MT is located and whose signal quality is best in the first area of the one or more cells.

For example, the apparatus includes a communication unit 801 and a processing unit 802, configured to implement the method performed by the IAB node in the foregoing embodiment. The processing unit 802 is configured to: when the IAB node is located in second areas of all cells whose signal quality is greater than a threshold in a cell of a first access network device, initiate a random access process to a second cell of the first access network device, where the second cell is a cell in which the IAB node is located and whose signal quality is best in a cell of a second area of the IAB node; and the second area is an unpermitted area in the cell of the first access network device. The communication unit 801 is configured to receive neighboring cell measurement indication information, where the neighboring cell measurement indication information indicates the IAB node to perform a neighboring cell measurement operation on one or more neighboring cells. For a specific execution procedure of the communication unit 801 and the processing unit 802 in this example, refer to the detailed descriptions of the IAB node mobility management method in the foregoing embodiment. Details are not described herein again. In the IAB node mobility management method implemented by the apparatus, if the IAB node is not located in a first area of any cell whose signal strength is greater than a threshold (that is, an area other than an unpermitted area in the cell) when the IAB node is powered on, the IAB-MT accesses a cell with best signal quality, but does not activate an IAB-DU.

The following describes a device including a plurality of functional units shown in FIG. 8. The device in this application includes a plurality of functional units shown in FIG. 8. For example, FIG. 9 shows a communication device 900 according to this application. The communication device 900 is configured to implement the IAB node mobility management method in the foregoing method embodiments. The communication device 900 may alternatively be a chip system. The communication device 900 includes a communication interface 901 and a processor 902. The communication interface 901 may be, for example, a transceiver, an interface, a bus, a circuit, or an apparatus that can implement receiving and sending functions. The communication interface 901 is configured to communicate with another device by using a transmission medium, so that the communication device 900 can communicate with the another device. The processor 902 and the communication interface 901 are configured to implement the methods in the embodiments corresponding to FIG. 3 to FIG. 7d.

For example, the communication interface 901 and the processor 902 are configured to implement the IAB node mobility management method in the foregoing embodiments. The communication interface 901 is configured to send unpermitted area information in a cell of the first access network device to an IAB node. The processor 902 is configured to respond to a random access process initiated by the IAB node to a first cell of the first access network device. The first cell is a cell in which the IAB node is located and whose signal quality is best in a cell of a first area of the IAB node. The first area is an area other than an unpermitted area in the cell of the first access network device. For a specific execution procedure of the communication interface 901 and the processor 902 in this example, refer to the detailed descriptions of the IAB node mobility management method in the foregoing embodiment. Details are not described herein again. In the IAB node mobility management method implemented by the device, unpermitted area information in a current cell may be directly indicated to the IAB node, so that when the IAB-MT is powered on, the IAB-MT can directly select a cell with best signal quality for access, where the IAB-MT is located in a first area of the cell, thereby helping the IAB node to select a serving cell located in a permitted area to work normally under a condition that an unpermitted area constraint exists.

For example, the communication interface 901 and the processor 902 are configured to implement the IAB node mobility management method in the foregoing embodiments. The communication interface 901 is configured to receive location information of an IAB node; and when the location information indicates that the IAB node is located in an unpermitted area in a serving cell, send neighboring cell measurement indication information to the IAB node, where the neighboring cell measurement indication information indicates the IAB node to perform a neighboring cell measurement operation on one or more neighboring cells. The processor 902 is configured to: when a neighboring cell measurement result is that signal quality of a first neighboring cell is greater than a threshold and the IAB node is located in a first area of the first neighboring cell, hand over the IAB node to the first neighboring cell, where the first area is an area other than an unpermitted area in a cell of a first access network device. For a specific execution procedure of the communication interface 901 and the processor 902 in this example, refer to the detailed descriptions of the IAB node mobility management method in the foregoing embodiment. Details are not described herein again. In the IAB node mobility management method implemented by the device, if unpermitted area information of a current cell is not directly indicated to the IAB node, the IAB node directly selects a cell with a best access signal, and reports location information to the first access network device after the access, and then the first access network device determines whether to hand over an IAB-MT to a cell that is located in a first area of the cell and whose signal quality is best.

For example, the communication interface 901 and the processor 902 are configured to implement the IAB node mobility management method in the foregoing embodiments. The processor 902 is configured to: when an IAB node is located in a second area of a cell whose signal quality is greater than a threshold in a cell of the first access network device, respond to a random access process initiated by a mobile terminal MT of the IAB node to a second cell of the first access network device, where the second cell is a cell in which the IAB node is located and whose signal quality is best in a cell of a second area of the IAB node; and the second area is an unpermitted area in the cell of the first access network device. The communication interface 901 is configured to send neighboring cell measurement indication information to the IAB node, where the neighboring cell measurement indication information indicates the IAB node to perform a neighboring cell measurement operation on one or more neighboring cells. For a specific execution procedure of the communication interface 901 and the processor 902 in this example, refer to the detailed descriptions of the IAB node mobility management method in the foregoing embodiment. Details are not described herein again. In the IAB node mobility management method implemented by the device, if the IAB node is not located in a first area of any cell whose signal strength is greater than a threshold (that is, an area other than an unpermitted area in the cell) when the IAB node is powered on, the IAB-MT accesses a cell with best signal quality, but does not activate an IAB-DU.

For example, the communication interface 901 and the processor 902 are configured to implement the IAB node mobility management method in the foregoing embodiments. The communication interface 901 is configured to receive unpermitted area information in one or more cells. The processor 902 is configured to initiate a random access process to a first cell, where the first cell is a cell in which the IAB node is located and whose signal quality is best in a cell of a first area of the IAB node, and the first area is an area other than an unpermitted area in the one or more cells. For a specific execution procedure of the communication interface 901 and the processor 902 in this example, refer to the detailed descriptions of the IAB node mobility management method in the foregoing embodiment. Details are not described herein again. In the IAB node mobility management method implemented by the device, the unpermitted area information in the one or more cells (the one or more cells herein may belong to a same access network device, or may belong to different access network devices) may be received, so that when the IAB-MT is powered on, the IAB-MT can directly select a cell with best signal quality for access, where the IAB-MT is located in a first area of the cell, thereby helping the IAB node to select a serving cell located in a permitted area to work normally under a condition that an unpermitted area constraint exists.

For example, the communication interface 901 and the processor 902 are configured to implement the IAB node mobility management method in the foregoing embodiments. The communication interface 901 is configured to send location information of the IAB node to a first access network device in which a serving cell is located; and when the location information indicates that the IAB node is located in an unpermitted area in the serving cell, receive neighboring cell measurement indication information, where the neighboring cell measurement indication information indicates the IAB node to perform a neighboring cell measurement operation on one or more neighboring cells. The processor 902 is configured to: when a neighboring cell measurement result is that signal quality of a first neighboring cell is greater than a threshold and the IAB node is located in a first area of the first neighboring cell, perform handover to the first neighboring cell based on a first handover instruction of the first access network device, where the first area is an area other than an unpermitted area in a cell of the first access network device or a second access network device, and the second access network device includes one or more access network devices adjacent to the first access network device. For a specific execution procedure of the communication interface 901 and the processor 902 in this example, refer to the detailed descriptions of the IAB node mobility management method in the foregoing embodiment. Details are not described herein again. In the IAB node mobility management method implemented by the device, the IAB node can directly select a cell with a best access signal, and report location information to the first access network device after the access. If the IAB node is located in a first area of one or more cells, an IAB-MT may be handed over to a cell in which the IAB-MT is located and whose signal quality is best in the first area of the one or more cells.

For example, the communication interface 901 and the processor 902 are configured to implement the IAB node mobility management method in the foregoing embodiments. The processor 902 is configured to: when the IAB node is located in second areas of all cells whose signal quality is greater than a threshold in a cell of a first access network device, initiate a random access process to a second cell of the first access network device, where the second cell is a cell in which the IAB node is located and whose signal quality is best in a cell of a second area of the IAB node; and the second area is an unpermitted area in the cell of the first access network device. The communication interface 901 is configured to receive neighboring cell measurement indication information, where the neighboring cell measurement indication information indicates the IAB node to perform a neighboring cell measurement operation on one or more neighboring cells. For a specific execution procedure of the communication interface 901 and the processor 902 in this example, refer to the detailed descriptions of the IAB node mobility management method in the foregoing embodiment. Details are not described herein again. In the IAB node mobility management method implemented by the device, if the IAB node is not located in a first area of any cell whose signal strength is greater than a threshold (that is, an area other than an unpermitted area in the cell) when the IAB node is powered on, the IAB-MT accesses a cell with best signal quality, but does not activate an IAB-DU.

Optionally, the device may further include at least one memory 903, configured to store program instructions and/or data. In an implementation, the memory is coupled to the processor. The coupling in this application is indirect coupling or communication connection between apparatuses, units, or modules, and may be in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected by using a bus 904. The bus is represented by using a thick line in FIG. 9. A connection manner between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

This application provides a computer-readable storage medium. The computer-readable storage medium stores a program or instructions. When the program or the instructions are run on a computer, the computer is enabled to perform the IAB node mobility management method in the embodiments corresponding to FIG. 3 to FIG. 7d.

This application provides a computer program product. The computer program product includes instructions. When the instructions are run on a computer, the computer is enabled to perform the IAB node mobility management method in the embodiments corresponding to FIG. 3 to FIG. 7d.

This application provides a chip or a chip system. The chip or the chip system includes at least one processor and an interface. The interface and the at least one processor are interconnected by using a line. The at least one processor is configured to run a computer program or instructions, to perform the IAB node mobility management method in the embodiments corresponding to FIG. 3 to FIG. 7d.

The interface in the chip may be an input/output interface, a pin, a circuit, or the like.

The chip system may be a system on chip (system on chip, SoC), or may be a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When the software is used for implementation, all or some of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise that there is no logical conflict, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An IAB node mobility management method, comprising:
sending unpermitted area information in a cell of a first access network device to an IAB node; and
responding to a random access process initiated by the IAB node to a first cell of the first access network device, wherein
the first cell is a cell in which the IAB node is located and whose signal quality is best in a cell of a first area of the IAB node; and
the first area is an area other than an unpermitted area in the cell of the first access network device.

2. An IAB node mobility management method, comprising:
receiving location information of an IAB node;
when the location information indicates that the IAB node is located in an unpermitted area in a serving cell, sending neighboring cell measurement indication information to the IAB node, wherein
the neighboring cell measurement indication information indicates the IAB node to perform a neighboring cell measurement operation on one or more neighboring cells; and
when a neighboring cell measurement result is that signal quality of a first neighboring cell is greater than a threshold and the IAB node is located in a first area of the first neighboring cell, handing over the IAB node to the first neighboring cell, wherein
the first area is an area other than an unpermitted area in a cell of a first access network device.

3. An IAB node mobility management method, comprising:
when an IAB node is located in a second area of a cell whose signal quality is greater than a threshold in a cell of a first access network device, responding to a random access process initiated by a mobile terminal MT of the IAB node to a second cell of the first access network device, wherein
the second cell is a cell in which the IAB node is located and whose signal quality is best in a cell of a second area of the IAB node; and
the second area is an unpermitted area in the cell of the first access network device; and
sending neighboring cell measurement indication information to the IAB node, wherein
the neighboring cell measurement indication information indicates the IAB node to perform a neighboring cell measurement operation on one or more neighboring cells.

4. The method according to any one of claims 1 to 3, wherein the method further comprises:
receiving unpermitted area information in the cell of the first access network device; and
receiving unpermitted area information in a cell of a second access network device, wherein
the second access network device comprises one or more access network devices adjacent to the first access network device.

5. The method according to any one of claims 1 to 3, wherein the method further comprises:
when the IAB node is located in a second area in the serving cell, configuring a distributed unit of the IAB node to be in an inactive state; or
when the IAB node is located in a first area in the serving cell, configuring the distributed unit of the IAB node to be in an active state.

6. The method according to claim 2 or 3, wherein the method further comprises:
sending unpermitted area information in the cell of the first access network device and unpermitted area information in a cell of a second access network device to the IAB node, wherein
the second access network device comprises one or more access network devices adjacent to the first access network device.

7. The method according to claim 6, wherein the method further comprises:
when the IAB node is located in the unpermitted area in the cell of the first access network device and an unpermitted area in the cell of the second access network device, and a trigger condition for handing over the IAB node from the first access network device to the second access network device is met, sending a handover request message to the second access network device, wherein
the handover request message is used to request to hand over the IAB node to the second access network device, and configure a distributed unit of the IAB node to be in an inactive state.

8. The method according to claim 3, wherein the method further comprises:
when the IAB node is located in a first area in the cell of the first access network device, receiving first information of the IAB node; and
configuring a distributed unit of the IAB node to be in an active state based on the first information of the IAB node, wherein
the first information comprises one or more of the following information: location information of the IAB node, an identifier of a target cell selected by the IAB node to access, and indication information for requesting to activate the distributed unit of the IAB node.

9. The method according to claim 3, wherein the method further comprises:
when the IAB node is located in a second area of a serving cell and is located in a third area of a neighboring cell whose signal strength is greater than a threshold, receiving first information from the IAB node, wherein
the first information comprises one or more of the following information: location information of the IAB node, an identifier of a target cell selected by the IAB node to access, and indication information for requesting to activate a distributed unit of the IAB node; and
sending a handover request message to a second access network device whose access signal quality is best in a third area of the second access network device in which the IAB node is located, wherein
the handover request message is used to request to hand over the IAB node to the second access network device; and
the third area is an area other than an unpermitted area in the neighboring cell.

10. The method according to claim 9, wherein when the distributed unit of the IAB node is in an inactive state, the handover request message is further used to configure the distributed unit of the IAB node to be in an active state.

11. The method according to any one of claims 1 to 3, wherein the method further comprises:
when the IAB node is located in a second area of the serving cell, and is not located in a third area of any neighboring cell whose signal strength is greater than a threshold, determining one or more target cells for a terminal device served by the IAB node, wherein
the third area is an area other than an unpermitted area in the neighboring cell; and
after the terminal device served by the IAB node is handed over to the one or more target cells, configuring a distributed unit of the IAB node to be in an inactive state.

12. The method according to any one of claims 5 to 11, wherein the configuring a distributed unit of the IAB node to be in an inactive state comprises one or more of the following manners:
skipping initiating setup of a default radio link control channel;
skipping initiating setup of an F1 interface;
configuring all cells of the distributed unit of the IAB node to bar access of the terminal device; or
skipping configuring a transport network layer association for the distributed unit of the IAB node.

13. An IAB node mobility management method, comprising:
receiving unpermitted area information in one or more cells; and
initiating a random access process to a first cell, wherein
the first cell is a cell in which an IAB node is located and whose signal quality is best in a cell of a first area of the IAB node; and
the first area is an area other than an unpermitted area in the one or more cells.

14. An IAB node mobility management method, comprising:
sending location information of an IAB node to a first access network device in which a serving cell is located;
when the location information indicates that the IAB node is located in an unpermitted area in the serving cell, receiving neighboring cell measurement indication information, wherein
the neighboring cell measurement indication information indicates the IAB node to perform a neighboring cell measurement operation on one or more neighboring cells; and
when a neighboring cell measurement result is that signal quality of a first neighboring cell is greater than a threshold and the IAB node is located in a first area of the first neighboring cell, performing handover to the first neighboring cell based on a first handover instruction of the first access network device, wherein
the first area is an area other than an unpermitted area in a cell of the first access network device or a second access network device; and
the second access network device comprises one or more access network devices adjacent to the first access network device.

15. An IAB node mobility management method, comprising:
when an IAB node is located in a second area of a cell whose signal quality is greater than a threshold in a cell of a first access network device, initiating a random access process to a second cell of the first access network device, wherein
the second cell is a cell in which the IAB node is located and whose signal quality is best in a cell of a second area of the IAB node; and
the second area is an unpermitted area in the cell of the first access network device; and
sending neighboring cell measurement indication information to the IAB node, wherein
the neighboring cell measurement indication information indicates the IAB node to perform a neighboring cell measurement operation on one or more neighboring cells.

16. The method according to any one of claims 13 to 15, wherein the method further comprises:
when the IAB node is located in a second area in the serving cell, determining a distributed unit of the IAB node to be in an inactive state; or
when the IAB node is located in a first area in the serving cell, activating the distributed unit of the IAB node.

17. The method according to claim 15 or 16, wherein the method further comprises:
receiving unpermitted area information in the cell of the first access network device and unpermitted area information in a cell of a second access network device, wherein
the second access network device comprises one or more access network devices adjacent to the first access network device.

18. The method according to claim 17, wherein the method further comprises:
when the IAB node is located in the unpermitted area in the cell of the first access network device and an unpermitted area in the cell of the second access network device, and a trigger condition for handing over the IAB node from the first access network device to the second access network device is met, performing handover to the second access network device based on a second handover instruction of the first access network device; and
determining that the distributed unit of the IAB node is in an inactive state.

19. The method according to any one of claims 13 to 15, wherein the method further comprises:
when the IAB node is located in a first area in the cell of the first access network device, sending first information to the first access network device, wherein
the first information comprises one or more of the following information: location information of the IAB node, an identifier of a target cell selected by the IAB node to access, and indication information for requesting to activate a distributed unit of the IAB node; and
activating the distributed unit of the IAB node.

20. The method according to any one of claims 13 to 15, wherein the method further comprises:
when the IAB node is located in a second area of the serving cell and is located in a third area of a neighboring cell whose signal strength is greater than a threshold, sending a measurement report of the IAB node and first information to the first access network device;
receiving a third handover instruction of the first access network device, wherein the third handover instruction is determined based on the measurement report of the IAB node and the first information; and
performing handover to the second access network device based on the third handover instruction of the first access network device, wherein
the second access network device is an access network device whose access signal quality is best in a third area of the access network device in which the IAB node is located; and
the third area is an area other than an unpermitted area in the neighboring cell.

21. The method according to claim 20, wherein the method further comprises: when a distributed unit of the IAB node is in an inactive state, activating the distributed unit of the IAB node.

22. The method according to any one of claims 13 to 15, wherein the method further comprises:
when the IAB node is located in a second area of the serving cell, and is not located in a third area of any neighboring cell whose signal strength is greater than a threshold, handing over a terminal device served by the IAB node to one or more target cells based on a fourth handover instruction of the first access network device, wherein
the third area is an area other than an unpermitted area in the neighboring cell; and
determining that a distributed unit of the IAB node is in an inactive state.

23. The method according to any one of claims 16 to 22, wherein the determining that a distributed unit of the IAB node is in an inactive state comprises one or more of the following manners:
skipping setting up a default radio link control channel;
skipping setting up an F1 interface;
configuring all cells of the distributed unit of the IAB node to bar access of the terminal device; or
skipping configuring a transport network layer association for the distributed unit of the IAB node.

24. An integrated access and backhaul IAB node mobility management method, comprising:
when an IAB node accesses a network, receiving a context setup request message about a mobile terminal MT of the IAB node from an access and mobility management network element, wherein the message indicates that the MT of the IAB node is not authorized; and
determining, based on the message, that the IAB node is not allowed to provide an IAB service.

25. The method according to claim 24, wherein the method further comprises:
configuring a distributed unit DU of the IAB node to be in an inactive state; and
determining that the MT of the IAB node is in a connected state.

26. The method according to claim 25, wherein the method further comprises:
receiving a context update request message about the MT of the IAB node from the access and mobility management network element, wherein the message indicates that the MT of the IAB node is authorized; and
determining, based on the message, that the IAB node is allowed to provide an IAB service.

27. The method according to claim 26, wherein the method further comprises:
configuring the distributed unit DU of the IAB node to be in an active state.

28. The method according to any one of claims 25 to 27, wherein the configuring a distributed unit DU of the IAB node to be in an inactive state comprises:
skipping configuring a default radio link control RLC channel for the IAB node.

29. The method according to claim 28, wherein the configuring the distributed unit DU of the IAB node to be in an active state comprises:
sending, to the MT of the IAB node, indication information indicating the MT to set up a default radio link control channel;
sending a radio resource control RRC message to the MT of the IAB node, wherein the RRC message is used to allocate a backhaul adaptation protocol BAP address and a default BAP routing identifier to the MT;
sending an RRC message to the MT of the IAB node, wherein the RRC message is used to allocate an IP address to the MT;
configuring a transport network layer association for the DU of the IAB node;
sending an RRC message to the MT of the IAB node, wherein the RRC message indicates the DU of the IAB node to send an F1 interface setup request message, or send an F1 interface setup response message to the DU of the IAB node; or
configuring all cells of the DU of the IAB node to allow access of the terminal device.

30. The method according to any one of claims 25 to 27, wherein the configuring a distributed unit DU of the IAB node to be in an inactive state comprises:
sending an RRC message to the MT of the IAB node, wherein the RRC message indicates the DU of the IAB node not to send an F1 interface setup request message, or send an F1 interface setup failure message to the DU of the IAB node.

31. The method according to claim 30, wherein the configuring the distributed unit DU of the IAB node to be in an active state comprises:
sending an RRC message to the MT of the IAB node, wherein the RRC message indicates the DU of the IAB node to send an F1 interface setup request message, or send an F1 interface setup response message to the DU of the IAB node; or
configuring all cells of the DU of the IAB node to allow access of the terminal device.

32. The method according to any one of claims 25 to 27, wherein the configuring a distributed unit DU of the IAB node to be in an inactive state comprises:
configuring all cells of the DU of the IAB node to bar access of the terminal device.

33. The method according to claim 32, wherein the configuring the distributed unit DU of the IAB node to be in an active state comprises:
configuring all cells of the DU of the IAB node to allow access of the terminal device.

34. The method according to any one of claims 25 to 27, wherein the configuring a distributed unit DU of the IAB node to be in an inactive state comprises:
skipping configuring a transport network layer association for the DU of the IAB node.

35. The method according to claim 34, wherein the configuring the distributed unit DU of the IAB node to be in an active state comprises:
configuring a transport network layer association for the DU of the IAB node;
sending an RRC message to the MT of the IAB node, wherein the RRC message indicates the DU of the IAB node to send an F1 interface setup request message, or send an F1 interface setup response message to the DU of the IAB node; or
configuring all cells of the DU of the IAB node to allow access of the terminal device.

36. The method according to any one of claims 25 to 27, wherein the configuring a distributed unit DU of the IAB node to be in an inactive state comprises:
setting up a default radio link control channel for the MT of the IAB node, but skipping allocating a backhaul adaptation protocol BAP address and/or a default BAP routing identifier.

37. The method according to claim 36, wherein the configuring the distributed unit DU of the IAB node to be in an active state comprises:
sending an RRC message to the MT of the IAB node, wherein the RRC message is used to allocate a backhaul adaptation protocol BAP address and a default BAP routing identifier to the MT;
sending an RRC message to the MT of the IAB node, wherein the RRC message is used to allocate an IP address to the MT;
configuring a transport network layer association for the DU of the IAB node;
sending an RRC message to the MT of the IAB node, wherein the RRC message indicates the DU of the IAB node to send an F1 interface setup request message, or send an F1 interface setup response message to the DU of the IAB node; or
configuring all cells of the DU of the IAB node to allow access of the terminal device.

38. The method according to any one of claims 25 to 27, wherein the configuring a distributed unit DU of the IAB node to be in an inactive state comprises:
sending an RRC message to the MT of the IAB node, wherein the RRC message indicates the MT of the IAB node not to request an IP address, or indicates to refuse to allocate an IP address.

39. The method according to claim 38, wherein the configuring the distributed unit DU of the IAB node to be in an active state comprises:
sending an RRC message to the MT of the IAB node, wherein the RRC message is used to allocate an IP address to the MT;
configuring a transport network layer association for the DU of the IAB node;
sending an RRC message to the MT of the IAB node, wherein the RRC message indicates the DU of the IAB node to send an F1 interface setup request message, or send an F1 interface setup response message to the DU of the IAB node; or
configuring all cells of the DU of the IAB node to allow access of the terminal device.

40. An integrated access and backhaul IAB node mobility management method, wherein the method is applied to an IAB node, and comprises:
when the IAB node accesses a network, determining that a mobile terminal MT of the IAB node is in a connected state, and determining that a distributed unit DU of the IAB node is in an inactive state.

41. The method according to claim 40, wherein the method further comprises:
determining that the distributed unit DU of the IAB node is in an active state.

42. The method according to claim 40 or 41, wherein the determining that a distributed unit DU of the IAB node is in an inactive state comprises:
receiving, by the MT of the IAB node, indication information indicating the MT of the IAB node not to set up a default radio link control channel.

43. The method according to claim 42, wherein the determining that the distributed unit DU of the IAB node is in an active state comprises:
receiving, by the MT of the IAB node, indication information indicating the MT not to set up a default radio link control channel;
receiving, by the MT of the IAB node, a radio resource control RRC message, wherein the RRC message is used to allocate a backhaul adaptation protocol BAP address and a default BAP routing identifier to the MT;
receiving, by the MT of the IAB node, an RRC message, wherein the RRC message is used to allocate an IP address to the MT;
configuring, by the DU of the IAB node, a transport network layer association;
receiving, by the MT of the IAB node, an RRC message, wherein the RRC message indicates the DU of the IAB node to send an F1 interface setup request message, or receiving, by the DU of the IAB node, an F1 interface setup response message; or
configuring all cells of the DU of the IAB node to allow access of a terminal device.

44. The method according to claim 40 or 41, wherein the determining that a distributed unit DU of the IAB node is in an inactive state comprises:
receiving, by the MT of the IAB node, an RRC message, wherein the RRC message indicates the DU of the IAB node not to send an F1 interface setup request message, or receiving, by the DU of the IAB node, an F1 interface setup failure message.

45. The method according to claim 44, wherein the determining that the distributed unit DU of the IAB node is in an active state comprises:
receiving, by the MT of the IAB node, an RRC message, wherein the RRC message indicates the DU of the IAB node to send an F1 interface setup request message, or receiving, by the DU of the IAB node, an F1 interface setup response message; or
configuring all cells of the DU of the IAB node to allow access of a terminal device.

46. The method according to claim 40 or 41, wherein the determining that a distributed unit DU of the IAB node is in an inactive state comprises:
configuring all cells of the DU of the IAB node to bar access of a terminal device.

47. The method according to claim 46, wherein the determining that the distributed unit DU of the IAB node is in an active state comprises:
configuring all cells of the DU of the IAB node to allow access of the terminal device.

48. The method according to claim 40 or 41, wherein the determining that a distributed unit DU of the IAB node is in an inactive state comprises:
skipping, by the DU of the IAB node, configuring a transport network layer association.

49. The method according to claim 48, wherein the determining that the distributed unit DU of the IAB node is in an active state comprises:
configuring, by the DU of the IAB node, a transport network layer association;
receiving, by the MT of the IAB node, an RRC message, wherein the RRC message indicates the DU of the IAB node to send an F1 interface setup request message, or receiving, by the DU of the IAB node, an F1 interface setup response message; and
configuring all cells of the DU of the IAB node to allow access of a terminal device.

50. The method according to claim 40 or 41, wherein the determining that a distributed unit DU of the IAB node is in an inactive state comprises:
receiving, by the MT of the IAB node, indication information indicating not to allocate a BAP address and/or a default BAP routing identifier to the MT of the IAB node.

51. The method according to claim 50, wherein the determining that the distributed unit DU of the IAB node is in an active state comprises:
receiving, by the MT of the IAB node, an RRC message, wherein the RRC message is used to allocate a backhaul adaptation protocol BAP address and a default BAP routing identifier to the MT;
receiving, by the MT of the IAB node, an RRC message, wherein the RRC message is used to allocate an IP address to the MT;
configuring, by the DU of the IAB node, a transport network layer association;
receiving, by the MT of the IAB node, an RRC message, wherein the RRC message indicates the DU of the IAB node to send an F1 interface setup request message, or receiving, by the DU of the IAB node, an F1 interface setup response message; or
configuring all cells of the DU of the IAB node to allow access of a terminal device.

52. The method according to claim 40 or 41, wherein the determining that a distributed unit DU of the IAB node is in an inactive state comprises:
receiving, by the MT of the IAB node, an RRC message, wherein the RRC message indicates the MT of the IAB node not to request an IP address, or indicates to refuse to allocate an IP address.

53. The method according to claim 52, wherein the determining that the distributed unit DU of the IAB node is in an active state comprises:
receiving, by the MT of the IAB node, an RRC message, wherein the RRC message is used to allocate an IP address to the MT;
configuring, by the DU of the IAB node, a transport network layer association;
receiving, by the MT of the IAB node, an RRC message, wherein the RRC message indicates the DU of the IAB node to send an F1 interface setup request message, or receiving, by the DU of the IAB node, an F1 interface setup response message; and
configuring all cells of the DU of the IAB node to allow access of a terminal device.

54. An integrated access and backhaul IAB node mobility management method, comprising:
when an IAB node accesses a network, receiving a context setup request message about a mobile terminal MT of the IAB node from an access and mobility management network element, wherein the context setup request message indicates that the MT of the IAB node is authorized;
receiving a context update request message about the mobile terminal MT of the IAB node from the access and mobility management network element, wherein the context update request message indicates that the MT of the IAB node is not authorized; and
determining, based on the context update request message of the MT, that the IAB node is not allowed to provide an IAB service.

55. The method according to claim 54, wherein the method further comprises:
configuring a distributed unit DU of the IAB node to be in a deactivated state.

56. The method according to claim 54 or 55, wherein the method further comprises:
receiving a first message from the access and mobility management network element, wherein the first message indicates to hand over a terminal device served by the IAB node to a first cell, and the first cell comprises a cell other than a cell served by the IAB node.

57. The method according to claim 56, wherein the method further comprises:
handing over the terminal device to the first cell.

58. The method according to any one of claims 55 to 57, wherein the configuring a distributed unit DU of the IAB node to be in a deactivated state comprises at least one of the following:
sending an RRC message to the MT of the IAB node, wherein the RRC message indicates the MT to delete radio link control channels of all backhaul links;
sending an RRC message to the MT of the IAB node, wherein the RRC message indicates the MT to delete a BAP address and/or a default BAP routing identifier;
sending an RRC message to the MT of the IAB node, wherein the RRC message indicates the MT to delete an IP address;
deleting a transport network layer association;
sending an F1 interface deletion request message to the DU of the IAB node, wherein the F1 interface deletion request message is used to request the DU to delete an F1 interface; or
configuring all cells of the DU of the IAB node to bar access of the terminal device.

59. An integrated access and backhaul IAB node mobility management method, wherein the method is applied to an IAB node, and comprises:
when the IAB node accesses a network, determining that a distributed unit DU of the IAB node is in an active state; or
determining that the DU of the IAB node is in a deactivated state.

60. The method according to claim 59, wherein the determining that the DU of the IAB node is in a deactivated state comprises at least one of the following:
receiving, by an MT of the IAB node, an RRC message, wherein the RRC message indicates the MT to delete radio link control channels of all backhaul links;
receiving, by the MT of the IAB node, an RRC message, wherein the RRC message indicates the MT to delete a BAP address and/or a default BAP routing identifier;
receiving, by the MT of the IAB node, an RRC message, wherein the RRC message indicates the MT to delete an IP address;
deleting a transport network layer association;
receiving, by the DU of the IAB node, an F1 interface deletion request message, wherein the F1 interface deletion request message is used to request the DU to delete an F1 interface; or
configuring all cells of the DU of the IAB node to bar access of a terminal device.

61. A communication apparatus, comprising a unit or a module configured to perform the method according to any one of claims 1 to 12, 13 to 23, or 24 to 60.

62. A communication device, comprising a processor and a memory, wherein the memory is coupled to the processor, and the processor is configured to perform the method according to any one of claims 1 to 12, 13 to 23, or 24 to 60.

63. A computer-readable storage medium, comprising instructions, wherein when the instructions are run on a computer, the computer is enabled to perform the method according to any one of claims 1 to 12, 13 to 23, or 24 to 60.
